# EUROPÄISCHE PATENTSCHRIFT

(11) **EP 4 568 911 B1**
(45) Veröffentlichungstag und Bekanntmachung des Hinweises auf die Patenterteilung: **01.04.2026**
(21) Anmeldenummer: 23748546.1
(22) Anmeldetag: 03.08.2023
(51) Int. Cl.: B66B 9/00, B62D 63/02

(54) **PERSONENTRANSPORTSYSTEM UND VERFAHREN ZUM TRANSPORTIEREN EINER PERSON**
PASSENGER TRANSPORT SYSTEM AND METHOD FOR TRANSPORTING A PERSON
SYSTÈME DE TRANSPORT DE PERSONNES ET PROCÉDÉ DE TRANSPORT D'UNE PERSONNE

(30) Priorität: 11.08.2022 EP 22190013
(43) Veröffentlichungstag der Anmeldung: 18.06.2025
(73) Patentinhaber: INVENTIO AG, 6052 Hergiswil (CH)
(72) Erfinder: OLCZYK, Eliza, 6048 Horw (CH); RÄBER, Thomas, 6006 Luzern (CH); SIMMONDS, Oliver, 6004 Luzern (CH); BITZI, Raphael, 6005 Luzern (CH); ZHANG, Qixuan, 8800 Thalwil (CH)
(74) Vertreter: Inventio AG
(86) Internationale Anmeldenummer: PCT/EP2023/071512
(87) Internationale Veröffentlichungsnummer: WO 2024/033209

(56) Entgegenhaltungen:
- EP-A1- 0 814 048
- EP-A1- 0 842 888
- JP-A- H06 156 939

## Beschreibung

Die Erfindung betrifft ein Personentransportsystem gemäss Anspruch 1 und ein Verfahren zum Transportieren einer Person gemäss dem Oberbegriff des Anspruchs 12.

Die WO 2019/224111 A1 beschreibt ein Personentransportsystem mit einem Transportfahrzeug in Form eines Strassenfahrzeugs und einer Kabine zur Aufnahme wenigstens einer Person. Das Transportfahrzeug und die Kabine sind koppelbar und entkoppelbar, so dass die Kabine mit einer in der Kabine befindlichen Person in einem mit dem Transportfahrzeug gekoppelten Zustand vom Transportfahrzeug transportiert werden kann. Das Transportfahrzeug kann die Kabine an einen beliebigen Ort und damit auch zu einem Gebäude transportieren. Damit beschreibt die WO 2019/224111 A1 auch ein Verfahren zum Transportieren einer Person in einer Kabine, wobei die Kabine mit einem Transportfahrzeug gekoppelt und vom Transportfahrzeug mit der Person zu einem Gebäude transportiert wird.

Die EP 0842888 A1 beschreibt ebenfalls ein derartiges Personentransportsystem mit einem Transportfahrzeug und einer Kabine. Die Kabine kann vom Transportfahrzeug zu einem Gebäude transportiert und dort an eine Plattform eines im Gebäude angeordneten Aufzugs übergeben werden. Mittels des Aufzugs kann die Kabine im Gebäude vertikal verlagert werden.

Die JP H06156939 A beschreibt einen Aufzug mit zwei vertikalen Aufzugschächten, in welchen Kabinen verlagert werden können. Die Kabinen können mittels eines Transportfahrzeugs zwischen den beiden Aufzugschächten verlagert werden. Die Kabinen können so von einem in den anderen Aufzugschacht wechseln.

Es ist insbesondere die Aufgabe der Erfindung, ein Personentransportsystem und ein Verfahren zum Transportieren einer Person vorzuschlagen, welche die transportierte Person möglichst bequem besonders nahe zu ihrem Ziel in einem Gebäude bringen können. Erfindungsgemäss wird diese Aufgabe mit einem Personentransportsystem mit den Merkmalen des Anspruchs 1 und einem Verfahren mit den Merkmalen des Anspruchs 12 gelöst.

Das erfindungsgemässe Personentransportsystem ist vorgesehen für eine von einem Transportfahrzeug transportierbare Kabine zur Aufnahme wenigstens einer Person, wobei das Transportfahrzeug und die Kabine koppelbar und entkoppelbar sind, so dass die Kabine in einem mit dem Transportfahrzeug gekoppelten Zustand vom Transportfahrzeug transportiert werden kann. Das Personentransportsystem weist eine an ein Gebäude angebundene Verlagerungseinrichtung auf. Die Verlagerungseinrichtung und die Kabine sind koppelbar und entkoppelbar, so dass die Kabine in einem mit der Verlagerungseinrichtung gekoppelten Zustand von der Verlagerungseinrichtung relativ zum genannten Gebäude auf einem ersten Haupt-Verlagerungsweg verlagert werden kann. Damit kann eine Person, die in einer Kabine vom Transportfahrzeug zu einem Gebäude, in dem sich ihr Ziel, beispielsweise ihre Wohnung befindet, transportiert wurde, ohne aus der Kabine aussteigen zu müssen, in oder an einem Gebäude entlang weiter in Richtung ihres Ziels transportiert werden. Die Kabine und damit die Person können beispielsweise von der Verlagerungseinrichtung an einer Aussenseite des Gebäudes entlang bis zu einer Wohnung der Person verlagert werden, so dass die Person aus der Kabine direkt in ihre Wohnung gelangen kann. Wenn die Person eine Fahrt innerhalb des Gebäudes, beispielsweise in ihrer Wohnung starten will, dann kann sie sehr bequem in eine von der Verlagerungseinrichtung am oder im Gebäude zur Verfügung gestellten Kabine einsteigen. Damit ist auch der Beginn einer Fahrt in einem Gebäude für eine Person sehr bequem und sie kann möglichst nahe bei ihrem Startpunkt in die Kabine einsteigen.

Erfindungsgemäss weist die Verlagerungseinrichtung neben dem ersten Haupt-Verlagerungsweg einen zweiten Haupt-Verlagerungsweg auf, auf dem die Kabine verlagert werden kann, wobei die genannten Haupt-Verlagerungswege unterschiedliche Haupt-Verlagerungsrichtungen aufweisen. Damit kann die Verlagerungseinrichtung die Kabine flexibel im Gebäude oder am Gebäude entlang verlagern und die Person in der Kabine damit besonders nahe an ihr Ziel im Gebäude bringen.

Die Verlagerungseinrichtung weist insbesondere nicht nur einen zweiten Haupt-Verlagerungsweg, sondern mehrere zweite Haupt-Verlagerungswege auf, welche insbesondere alle dieselbe Haupt-Verlagerungsrichtung aufweisen. Der zweite Haupt-Verlagerungsweg oder die zweiten Haupt-Verlagerungswege verlaufen insbesondere horizontal; die Haupt-Verlagerungsrichtung des zweiten Haupt-Verlagerungswegs verläuft damit ebenfalls horizontal. Der zweite Haupt-Verlagerungsweg oder die zweiten Haupt-Verlagerungswege können aber auch eine andere Haupt-Verlagerungsrichtung aufweisen. Sie verlaufen insbesondere gerade, können aber auch nicht gerade, beispielsweise gekrümmt verlaufen.

Die Verlagerung der Kabine auf dem zweiten Haupt-Verlagerungsweg oder den zweiten Haupt-Verlagerungswegen erfolgt insbesondere ebenfalls geführt, wobei die Führung analog zur Führung auf dem ersten Haupt-Verlagerungsweg ausgeführt ist.

Das erfindungsgemässe Personentransportsystem kann neben Personen auch Waren, beispielsweise Gepäck oder Einkäufe der Person transportieren. Es ist also nicht nur auf einen reinen Personentransport beschränkt.

Das Transportfahrzeug kann beispielsweise als ein Landfahrzeug, ein Luftfahrzeug oder ein Wasserfahrzeug ausgeführt sein. Es ist insbesondere als ein autonomes Transportfahrzeug ausgeführt, so dass es ohne einen Fahrzeugführer bzw. Fahrer auskommt. Es ist aber auch möglich, dass das Transportfahrzeug von einem eigens dafür vorgesehenen Fahrzeugführer oder einem Passagier in der Kabine gesteuert wird. Das Transportfahrzeug kann nur eine oder auch mehrere Kabinen gleichzeitig transportieren.

Ein als Landfahrzeug ausgeführtes Transportfahrzeug kann beispielsweise als ein Strassenfahrzeug, also ein auf Strassen fahrendes Fahrzeug ausgeführt sein. Es ist auch möglich, dass das Landfahrzeug als ein Schienenfahrzeug, also ein auf Schienen fahrendes Fahrzeug, also ähnlich einer Eisenbahn ausgeführt ist. In diesem Fall ist es insbesondere denkbar, dass das Schienenfahrzeug mehr als eine Kabine transportiert. Ein Luftfahrzeug kann beispielsweise als ein senkrecht startendes und landendes Flugzeug (Englisch: vertical take-off and landing (VTOL) aircraft), insbesondere als eine Drohne ausgeführt sein.

Die Kabine ist insbesondere antriebslos ausgeführt; sie weist also insbesondere keinen eigenen Antrieb auf. Es ist aber auch denkbar, dass die Kabine einen einfachen Antrieb und beispielsweise ausfahrbare Rollen aufweist, so dass die Kabine kurze Entfernungen alleine, also ohne das Transportfahrzeug oder die Verlagerungseinrichtung zurücklegen kann. Die Kabine kann für den Transport einer einzelnen Person oder auch für den Transport mehrerer Personen ausgelegt sein.

Unter einer Kopplung des Transportfahrzeugs und der Kabine bzw. der Verlagerungseinrichtung und der Kabine soll hier eine physikalische Kopplung und nicht nur eine informationstechnische Kopplung verstanden werden. Die genannte Kopplung kann beispielsweise mechanisch, magnetisch oder mittels Unterdruck erfolgen. Das Transportfahrzeug und die Kabine sowie die Verlagerungseinrichtung und die Kabine weisen dazu insbesondere korrespondierende Kopplungskomponenten auf, wobei das Transportfahrzeug wenigstens eine fahrzeugseitige Kopplungskomponente, die Verlagerungseinrichtung wenigstens eine einrichtungsseitige Kopplungskomponente und die Kabine wenigstens eine kabinenseitige Kopplungskomponente aufweisen. Beispielsweise kann die Kabine Holme aufweisen, welche von einem ansteuerbaren Greifer des Transportfahrzeugs oder der Verlagerungseinrichtung umschlossen werden und damit eine Kopplung mit der Kabine hergestellt werden kann. Alternativ ist es möglich, dass das Transportfahrzeug oder die Verlagerungseinrichtung einen ansteuerbaren Elektromagneten und die Kabine eine entsprechend positionierte magnetisierbare Platte aufweist. Durch eine Aktivierung des Elektromagneten kann damit eine Kopplung mit der Kabine hergestellt werden. Die Anordnung der Holme und Greifer bzw. der Elektromagneten und Platten kann auch umgekehrt sein. Darüber hinaus kann der Fachmann weitere mögliche Kopplungen und Entkopplungen von Transportfahrzeug und Kabine bzw. Verlagerungseinrichtung und Kabine vorsehen. Die Art und Ausführung der Kopplung von Transportfahrzeug und Kabine bzw. Verlagerungseinrichtung und Kabine sind hier nicht weiter von Bedeutung. Die Kopplung ist insbesondere redundant und damit sicher ausgeführt.

Die Kabine kann in einem mit dem Transportfahrzeug gekoppelten Zustand vom Transportfahrzeug transportiert, also beispielsweise auf einer Strasse gefahren oder in der Luft geflogen werden. In einem vom Transportfahrzeug entkoppelten Zustand kann die Kabine damit unabhängig vom Transportfahrzeug, also beispielsweise von einer an ein Gebäude angebundenen Verlagerungseinrichtung relativ zum genannten Gebäude verlagert bzw. transportiert werden.

Unter einer Anbindung der Verlagerungseinrichtung an ein Gebäude soll hier verstanden werden, dass die Verlagerungseinrichtung in und/oder an einem Gebäude angeordnet ist. Die Verlagerungseinrichtung in ihrer Gesamtheit ist damit unbeweglich gegenüber dem genannten Gebäude angeordnet, lediglich einzelne Komponenten der Verlagerungseinrichtung sind gegenüber dem Gebäude beweglich. Unter einer gegenüber dem Gebäude relativen Verlagerung der Kabine soll hier verstanden werden, dass die Kabine innerhalb des Gebäudes oder aussen entlang des Gebäudes verlagert wird. Die Verlagerung erfolgt dabei wenigstens auf einem ersten Haupt-Verlagerungsweg, welcher insbesondere gerade verläuft, aber auch nicht gerade, beispielsweise gekrümmt verlaufen kann. Die Verlagerung der Kabine erfolgt insbesondere geführt, beispielsweise von aus dem Aufzugbereich bekannten Führungsschienen oder in entsprechenden Ausnehmungen bzw. Nischen im oder am Gebäude. Der erste Haupt-Verlagerungsweg verläuft insbesondere in vertikaler Richtung; die Haupt-Verlagerungsrichtung des ersten Haupt-Verlagerungswegs verläuft damit ebenfalls vertikal. Die Kabine kann damit von der Verlagerungseinrichtung insbesondere im oder am Gebäude entlang von unten nach oben und von oben nach unten verlagert werden.

Die Kabine ist insbesondere ausser bei einem Wechsel vom Transportfahrzeug zur Verlagerungseinrichtung oder umgekehrt entweder mit dem Transportfahrzeug oder mit der Verlagerungseinrichtung gekoppelt. Der genannte Wechsel kann auch als eine Übergabe bezeichnet werden. Bei einem Wechsel der Kabine von einem Transportfahrzeug zur Verlagerungsrichtung wird die Kabine insbesondere vom Transportfahrzeug an eine Kopplungsstation transportiert, in der eine Kopplung mit der Verlagerungseinrichtung stattfinden kann. Anschliessend wird die Kabine insbesondere bei weiterhin bestehender Kopplung mit dem Transportfahrzeug mit der Verlagerungseinrichtung gekoppelt. Nachdem dies erfolgreich abgeschlossen wurde, wird die Kopplung der Kabine mit dem Transportfahrzeug gelöst, die Kabine also vom Transportfahrzeug entkoppelt. Anschliessend kann die Kabine mit der Verlagerungseinrichtung relativ zum Gebäude verlagert werden. Ein Wechsel der Kabine von der Verlagerungseinrichtung zu einem Transportfahrzeug läuft entsprechend bzw. in umgekehrter Reihenfolge ab.

Es ist auch möglich, dass die Kabine mittels eines Roboters vom Transportfahrzeug abgenommen und zur Kopplung mit der Verlagerungseinrichtung transportiert wird.

Das Personentransportsystem kann eine an ein Gebäude angebundene Verlagerungseinrichtung oder auch mehrere an ein einziges Gebäude oder an unterschiedliche Gebäude angebundene Verlagerungseinrichtungen aufweisen. Es kann insbesondere mit mehr als einem Transportfahrzeug interagieren, wobei die einzelnen Transportfahrzeuge gleich oder unterschiedlich ausgeführt sein können. Die entsprechenden Kabinen können ebenfalls gleich oder unterschiedlich aufgebaut sein. Sie müssen lediglich mit einem Transportfahrzeug und einer Verlagerungseinrichtung koppelbar und entkoppelbar sein.

Das Personentransportsystem weist insbesondere eine zentrale Steuerungseinrichtung auf, welche die einzelnen Transportfahrzeuge und die eine oder die mehreren Verlagerungseinrichtungen kontrolliert, koordiniert und/oder ansteuert. Die Transportfahrzeuge, die Kabinen und die Verlagerungseinrichtungen weisen insbesondere eigene Steuerungseinrichtungen auf, welche einzelne Funktionen selbständig ausführen können und welche mit der zentralen Steuerungseinrichtung und/oder anderen Steuerungseinrichtungen in Kommunikationsverbindung stehen.

In Ausgestaltung der Erfindung weist die Verlagerungseinrichtung einen Neben-Verlagerungsweg und insbesondere mehrere Neben-Verlagerungswege für die Kabine auf. Ein Neben-Verlagerungsweg zweigt von einem Haupt-Verlagerungsweg ab und ist so ausgeführt und angeordnet, dass er wenigstens eine Kabine so aufnehmen kann, dass der Haupt-Verlagerungsweg, aus dem der entsprechende Neben-Verlagerungsweg abzweigt, bei einer im entsprechenden Neben-Verlagerungsweg aufgenommenen Kabine oder mehrerer aufgenommener Kabinen von einer anderen Kabine benutzbar ist. Damit kann wenigstens eine Kabine in einem Neben-Verlagerungsweg verbleiben bzw. geparkt werden, ohne dass die geparkte Kabine die Nutzung der Verlagerungseinrichtung einschränkt. Ein Neben-Verlagerungsweg ist beispielsweise so angeordnet, dass eine Person aus der Kabine direkt über eine Gebäudeöffnung in das entsprechende Gebäude gelangen kann. Beispielsweise kann eine Person direkt aus der Kabine über eine entsprechende Gebäudeöffnung in ihre Wohnung gelangen.

Wenn die Verlagerungseinrichtung nur einen ersten Haupt-Verlagerungsweg aufweist, dann können die Neben-Verlagerungswege so vom Haupt-Verlagerungsweg abzweigen, dass sie im Bereich eines Stockwerks des Gebäudes neben dem Haupt-Verlagerungsweg verlaufen. Es kann links und rechts des Haupt-Verlagerungswegs jeweils ein Neben-Verlagerungsweg angeordnet sein, so dass pro Stockwerk zwei Kabinen in einem Neben-Verlagerungsweg geparkt werden können.

Es ist auch möglich, dass die Verlagerungseinrichtung einen Neben-Verlagerungsweg aufweist, in dem mehrere Kabinen geparkt werden können. Die Person kann dann beispielsweise auf dem gewünschten Stockwerk aus der Kabine aussteigen und die Kabine wird anschliessend in den genannten Neben-Verlagerungsweg gebracht. Dort wird die Kabine so lange geparkt, bis sie wieder verwendet, also zum Transportieren einer Person verwendet wird.

Wenn die Verlagerungseinrichtung einen ersten Haupt-Verlagerungsweg und wenigstens einen zweiten Haupt-Verlagerungsweg aufweist, dann zweigen Neben-Verlagerungswege insbesondere vom zweiten Haupt-Verlagerungsweg ab. Die Neben-Verlagerungswege können beispielsweise vom zweiten Haupt-Verlagerungsweg nach oben und/oder unten abzweigen. Es ist auch möglich, dass das Gebäude auf Höhe des zweiten Haupt-Verlagerungsweg Nischen aufweist, welche eine Kabine aufnehmen können. Die Neben-Verlagerungswege zweigen dann horizontal in Richtung Gebäude bzw. in Richtung der genannten Nischen vom zweiten Haupt-Verlagerungsweg ab.

In Ausgestaltung der Erfindung weist die Verlagerungseinrichtung einen ersten Antrieb, einen zweiten Antrieb, eine erste einrichtungsseitige Kopplungskomponente und eine zweite einrichtungsseitige Kopplungskomponente auf. Mittels des ersten Antriebs kann die erste einrichtungsseitige Kopplungskomponente auf dem ersten Haupt-Verlagerungsweg verlagert werden. Mittels des zweiten Antriebs kann die zweite einrichtungsseitige Kopplungskomponente auf dem zweiten Haupt-Verlagerungsweg verlagert werden. Die erste einrichtungsseitige Kopplungskomponente ist so ausgeführt und angeordnet, dass sie mit einer ersten kabinenseitigen Kopplungskomponente der Kabine koppelbar ist. Die zweite einrichtungsseitige Kopplungskomponente ist so ausgeführt und angeordnet, dass sie mit einer zweiten kabinenseitigen Kopplungskomponente der Kabine koppelbar ist. Damit kann die Verlagerungseinrichtung die Kabine besonders flexibel relativ zum Gebäude verlagern.

Die Kabine weist damit zwei kabinenseitige Kopplungskomponenten auf, die mit einrichtungsseitigen Kopplungskomponenten gekoppelt werden können. Die beiden kabinenseitigen Kopplungskomponenten können gleich oder unterschiedlich ausgeführt sein. Wenigstens eine der einrichtungsseitigen Kopplungskomponenten ist insbesondere gleichartig wie eine fahrzeugseitige Kopplungskomponente aufgebaut, so dass wenigstens eine kabinenseitige Kopplungskomponente sowohl mit einer fahrzeugseitigen Kopplungskomponente als auch mit einer einrichtungsseitigen Kopplungskomponente gekoppelt werden kann. Damit kann die Anzahl der an der Kabine benötigten kabinenseitigen Kopplungskomponenten gering gehalten werden.

Die einrichtungsseitigen Kopplungskomponenten sind insbesondere so ausgeführt, dass sie mit kabinenseitigen Kopplungskomponenten gekoppelt werden können, welche oben, unten oder seitlich an der Kabine angeordnet sind.

Die einrichtungsseitigen Kopplungskomponenten sind insbesondere an einem Rahmen oder einem Träger angeordnet oder sind Teil eines Rahmens oder eines Trägers. Der Rahmen oder Träger wird mit oder ohne gekoppelte Kabine wie oben ausgeführt insbesondere geführt im oder am Gebäude entlang verlagert. Die Antriebe der Verlagerungseinrichtung können beispielsweise als eine Winde, ein Linearantrieb oder ein Reibradantrieb ausgeführt sein. Eine Winde wäre über ein Tragmittel zumindest mittelbar mit der einrichtungsseitigen Kopplungskomponente verbunden. Eine Linearantrieb oder ein Reibradantrieb wäre an dem genannten Rahmen oder Träger angeordnet.

Die Kabine ist ausser bei einem Wechsel von einer Verlagerung auf dem ersten Haupt-Verlagerungsweg auf eine Verlagerung auf einem zweiten Haupt-Verlagerungsweg oder umgekehrt entweder mit der ersten einrichtungsseitigen Kopplungskomponente oder mit der zweiten einrichtungsseitigen Kopplungskomponente gekoppelt. Der genannte Wechsel kann auch als eine Übergabe bezeichnet werden. Bei einem Wechsel der Kabine vom ersten Haupt-Verlagerungsweg zum zweiten Haupt-Verlagerungsweg wird die Kabine in eine Wechselposition verlagert, in der eine Kopplung mit der zweiten einrichtungsseitigen Kopplungskomponente erfolgen kann. Die Wechselposition kann auf dem ersten Haupt-Verlagerungsweg angeordnet sein. Es ist auch möglich, dass die Wechselposition auf einem zweiten Haupt-Verlagerungsweg angeordnet ist. Anschliessend wird die Kabine bei bestehender Kopplung mit der ersten einrichtungsseitigen Kopplungskomponente zusätzlich mit der zweiten einrichtungsseitigen Kopplungskomponente gekoppelt. Nachdem dies erfolgreich abgeschlossen wurde, wird die Kopplung der Kabine mit der ersten einrichtungsseitigen Kopplungskomponente gelöst, die Kabine also vom ersten Antrieb entkoppelt. Anschliessend kann die Kabine vom zweiten Antrieb auf dem zweiten Haupt-Verlagerungsweg relativ zum Gebäude verlagert werden. Ein Wechsel der Kabine vom zweiten Haupt-Verlagerungsweg in den ersten Haupt-Verlagerungsweg läuft entsprechend bzw. in umgekehrter Reihenfolge ab.

In Ausgestaltung der Erfindung weist die Verlagerungseinrichtung einen dritten Antrieb und eine dritte einrichtungsseitige Kopplungskomponente auf. Mittels des dritten Antriebs kann die dritte einrichtungsseitige Kopplungskomponente auf einem Neben-Verlagerungswegs verlagert werden. Die dritte einrichtungsseitige Kopplungskomponente ist so ausgeführt und angeordnet, dass sie mit der ersten kabinenseitigen Kopplungskomponente der Kabine koppelbar ist. Die dritte einrichtungsseitige Kopplungskomponente ist damit gleichartig wie die erste einrichtungsseitige Kopplungskomponente aufgebaut. Damit ist für das Verlagern der Kabine auf einem Neben-Verlagerungsweg und damit für das Bringen der Kabine in eine Parkposition auf dem Neben-Verlagerungsweg keine zusätzliche kabinenseitige Kopplungskomponente notwendig. Damit kann die Anzahl der an der Kabine benötigten kabinenseitigen Kopplungskomponenten besonders gering gehalten werden.

Für den dritten Antrieb und die dritte einrichtungsseitige Kopplungskomponente gelten die obigen Aussagen zum ersten und zweiten Antrieb, sowie zur ersten und zweiten einrichtungsseitigen Kopplungskomponente entsprechend.

In Ausgestaltung der Erfindung weist die Verlagerungseinrichtung einen Wagen auf, auf welchen die Kabine aufgesetzt und auf einem horizontal verlaufendem Haupt-Verlagerungsweg verlagert werden kann. Damit kann besonders einfach eine horizontale Verlagerung der Kabine realisiert werden.

Nach einem Aufsetzen der Kabine auf den Wagen steht die Kabine auf dem Wagen, sie stützt sich also von oben auf dem Wagen ab. Der Wagen weist insbesondere Rollen auf, auf denen er sich nach unten auf dem Haupt-Verlagerungsweg abstützt. Der Haupt-Verlagerungsweg ist insbesondere so ausgeführt, dass der Wagen beim Verlagern des Wagens geführt wird. Die genannten Rollen können beispielsweise in entsprechenden Vertiefungen laufen und/oder der Wagen wird von entsprechenden Wangen des Haupt-Verlagerungswegs geführt.

Der Wagen weist insbesondere eine nach oben orientierte einrichtungsseitige Kopplungskomponente auf, welche beim oder nach dem Aufsetzen auf den Wagen mit einer unten an der Kabine angeordneten kabinenseitigen Kopplungskomponente gekoppelt wird. Der Antrieb zum Verlagern des Wagens ist insbesondere auf dem Wagen angeordnet und treibt insbesondere eine oder mehrere Rollen des Wagens an. Es ist aber auch möglich, dass der Antrieb vom Wagen beabstandet angeordnet und mit dem Wagen antriebsmässig verbunden ist. Der Antrieb kann beispielsweise als eine Winde ausgeführt sein, welche mit einem Seil mit dem Wagen verbunden ist.

Der horizontal verlaufendem Haupt-Verlagerungsweg ist insbesondere aussen am Gebäude angeordnet, beispielsweise als ein horizontaler Vorsprung am Gebäude. Der genannte Haupt-Verlagerungsweg kann insbesondere Abzweigungen in Neben-Verlagerungswege aufweisen, welche nach oben, unten oder in Richtung Gebäude verlaufen können.

Eine Alternative zur Verlagerung der Kabine auf einem Wagen ist, dass die Kabine ausgefahrbare und insbesondere antreibbare Räder aufweist, so dass sie ohne Unterstützung durch einen Wagen auf dem horizontal verlaufendem Haupt-Verlagerungsweg fahren kann.

In Ausgestaltung der Erfindung weist der zweite Haupt-Verlagerungsweg der Verlagerungseinrichtung ein bewegliches Verlängerungselement auf. Das Verlängerungselement ist so ausgeführt und angeordnet, dass mittels des Verlängerungselements der zweite Haupt-Verlagerungsweg in einen ersten Haupt-Verlagerungsweg hinein verlängert werden kann. Damit wird ein Wechsel der Kabine vom ersten Haupt-Verlagerungsweg in den zweiten Haupt-Verlagerungsweg und umgekehrt ermöglicht. Damit ist ein einfacher Wechsel der Kabine vom ersten in den zweiten Haupt-Verlagerungsweg und umgekehrt möglich.

Die Position, in der das Verlängerungselement den zweiten Haupt-Verlagerungsweg in den ersten Haupt-Verlagerungsweg hinein verlängert, kann dabei als aktive Position bezeichnet werden. Das Verlängerungselement nimmt eine inaktive Position ein, wenn es nicht in den ersten Haupt-Verlagerungsweg hineinragt. Das Verlängerungselement definiert damit in seiner aktiven Position im ersten Haupt-Verlagerungsweg die Wechselposition, in der wie oben beschrieben die zweite einrichtungsseitige Kopplungskomponente mit der Kabine gekoppelt werden kann. Das Verlängerungselement kann beispielsweise mittels eines geeigneten Antriebs horizontal in den ersten Haupt-Verlagerungsweg hinein verschoben oder um eine horizontal orientierte Schwenkachse in den ersten Haupt-Verlagerungsweg hinein verschwenkt werden.

In Ausgestaltung der Erfindung weist die erste einrichtungsseitige Kopplungskomponente der Verlagerungseinrichtung einen Tragarm auf, welcher mit einer an einer Oberseite oder an einer Unterseite der Kabine angeordneten ersten kabinenseitigen Kopplungskomponente der Kabine koppelbar ist. Der Tragarm ist so um eine vertikal verlaufende erste Schwenkachse verschwenkbar, dass eine mit der ersten einrichtungsseitigen Kopplungskomponente gekoppelte Kabine aus einem ersten Haupt-Verlagerungsweg in einen zweiten Haupt-Verlagerungsweg verlagert werden kann. Die Kabine wird damit in eine Wechselposition auf dem zweiten Haupt-Verlagerungsweg verlagert. Wenn sich die Kabine im zweiten Haupt-Verlagerungsweg und damit in der Wechselposition befindet, kann die zweite einrichtungsseitige Kopplungskomponente mit der Kabine gekoppelt werden. Damit wird ein Wechsel der Kabine vom ersten Haupt-Verlagerungsweg in den zweiten Haupt-Verlagerungsweg und umgekehrt ermöglicht. Damit ist ein einfacher Wechsel der Kabine vom ersten in den zweiten Haupt-Verlagerungsweg und umgekehrt möglich.

Der genannte Tragarm verläuft insbesondere hauptsächlich horizontal. Er ragt von einer Wand, insbesondere eine Aussenwand des Gebäudes weg und ist insbesondere so angeordnet, dass er beim Verlagern der Kabine auf dem ersten Haupt-Verlagerungsweg in einem Winkel von 90° von der genannten Wand weg ragt. Der Tragarm ist insbesondere so ausgeführt, dass die Kabine im gekoppelten Zustand am Tragarm aufgehängt ist. Die genannte erste Schwenkachse ist insbesondere in der Nähe der genannten Wand des Gebäudes angeordnet.

In Ausgestaltung der Erfindung weist die erste einrichtungsseitige Kopplungskomponente der Verlagerungseinrichtung ein Halteelement auf, welches mit einer an einer Seitenfläche der Kabine angeordneten ersten kabinenseitigen Kopplungskomponente der Kabine koppelbar ist und so um eine vertikal verlaufende zweite Schwenkachse verschwenkbar ist, dass eine mit der ersten einrichtungsseitigen Kopplungskomponente gekoppelte Kabine aus einem ersten Haupt-Verlagerungsweg in einen zweiten Haupt-Verlagerungsweg verlagert werden kann. Damit wird ein Wechsel der Kabine vom ersten Haupt-Verlagerungsweg in den zweiten Haupt-Verlagerungsweg und umgekehrt ermöglicht. Damit ist ein einfacher Wechsel der Kabine vom ersten in den zweiten Haupt-Verlagerungsweg und umgekehrt möglich.

Das genannte Haltelement weist insbesondere ein gebäudeseitiges Teil und ein kabinenseitiges Teil auf. Das gebäudeseitige Teil ist entlang einer Wand, insbesondere einer Aussenwand auf einem ersten Haupt-Verlagerungsweg verlagerbar, kann aber nicht von der genannten Wand weg verlagert werden. Das kabinenseitige Teil ist mit einem Scharnier mit dem gebäudeseitigen Teil verbunden; die genannte zweite Schwenkachse verläuft damit durch das Scharnier. Der kabinenseitige Teil ist mit der Kabine gekoppelt und kann mit einem geeigneten Antrieb vom gebäudeseitigen Teil und damit vom Gebäude weg oder zum gebäudeseitigen Teil und damit zum Gebäude hin verschwenkt werden. Die genannte Seitenfläche der Kabine erstreckt sich insbesondere hauptsächlich vertikal.

Die genannte zweite Schwenkachse ist insbesondere in der Nähe der genannten Wand des Gebäudes angeordnet. Durch das genannte Verschwenken des kabinenseitigen Teils des Halteelements wird eine mit dem kabinenseitigen Teils des Haltelements gekoppelte Kabine in eine Wechselposition verlagert, in der sie mit einer zweiten einrichtungsseitigen Kopplungskomponente gekoppelt werden kann.

In Ausgestaltung der Erfindung weist das Personentransportsystem einen an das genannte Gebäude angebundenen Aufzug auf, mittels welchem ein Transportfahrzeug insbesondere ohne Kabine von einer Anlieferungsebene auf eine Lagerungsebene verlagert werden kann. Die Verlagerung ist selbstverständlich auch von der Lagerungsebene zur Anlieferungsebene möglich. Damit können Transportfahrzeuge, welche eine Kabine an die Verlagerungseinrichtung für die weitere Verlagerung relativ zum Gebäude übergeben haben, sicher gelagert werden.

Unter eine Anlieferungsebene soll hier eine Ebene verstanden werden, auf der das Transportfahrzeug die Kabine am Gebäude anliefert, also auf der die Kopplungsstation zum Wechsel der Kabine vom Transportfahrzeug zur Verlagerungseinrichtung und umgekehrt angeordnet ist. Unter einer Lagerungsebene soll hier eine Ebene verstanden werden, welche oberhalb oder insbesondere unterhalb der Anlieferungsebene angeordnet ist und auf welcher ein Transportfahrzeug gelagert bzw. geparkt werden kann oder zumindest ein Lager bzw. Parkplatz vom Transportfahrzeug ohne weitere Hilfsmittel erreichbar ist. Wenn mehrere Lagerungsebenen existieren, kann der genannte Aufzug ein Transportfahrzeug auch auf mehr als eine Lagerungsebene, insbesondere auf alle existierenden Lagerungsebenen verlagern.

Der Aufzug weist insbesondere einen hauptsächlich vertikal verlaufenden Aufzugschacht auf, in welchem eine das Transportfahrzeug tragende Aufzugsplattform verlagert werden kann. Der Aufzugschacht ist dabei fluchtend zum ersten Haupt-Verlagerungsweg der Verlagerungseinrichtung angeordnet. Ein auf der Aufzugsplattform stehendes Transportfahrzeug kann damit vom Aufzug direkt von einer Kopplungsstation weg oder zu einer Kopplungsstation verlagert werden. Das Transportfahrzeug kann damit vorteilhafterweise nach einem Entkoppeln von einer Kabine, ohne sich noch bewegen zu müssen, vom Aufzug in eine Lagerungsebene verlagert werden. Wenn ein Transportfahrzeug vom Aufzug von der Lagerungsebene auf die Anlieferungsebene verlagert wird, dann wird es vorteilhafterweise direkt an eine Kopplungsstation gebracht.

Das Vorsehen des genannten Aufzugs kann ohne das Vorsehen eines zweiten, vom ersten Haupt-Verlagerungsweg abweichenden Haupt-Verlagerungswegs der Verlagerungseinrichtung als eigenständige Erfindung angesehen werden. Dabei würde sich ein Personentransportsystem für eine von einem Transportfahrzeug transportierbare Kabine zur Aufnahme wenigstens einer Person ergeben, wobei das Transportfahrzeug und die Kabine koppelbar und entkoppelbar sind, so dass die Kabine in einem mit dem Transportfahrzeug gekoppelten Zustand vom Transportfahrzeug transportiert werden könnte. Das Personentransportsystem würde eine an ein Gebäude angebundene Verlagerungseinrichtung aufweisen. Die Verlagerungseinrichtung und die Kabine wären koppelbar und entkoppelbar, so dass die Kabine in einem mit der Verlagerungseinrichtung gekoppelten Zustand von der Verlagerungseinrichtung relativ zum genannten Gebäude auf einem ersten Haupt-Verlagerungsweg verlagert werden kann. Das Personentransportsystem würde ausserdem einen an das genannte Gebäude angebundenen Aufzug aufweisen, mittels welchem ein Transportfahrzeug insbesondere ohne Kabine von einer Anlieferungsebene auf eine Lagerungsebene verlagert werden kann.

In Ausgestaltung der Erfindung verfügt das Personentransportsystem über eine erste Kopplungsstation und eine zweite Kopplungsstation. An der ersten Kopplungsstation kann eine Kabine von einer ersten Art von Transportfahrzeugen entkoppelt und mit der Verlagerungseinrichtung gekoppelt und von der Verlagerungseinrichtung entkoppelt und mit der ersten Art von Transportfahrzeugen gekoppelt werden. An der zweiten Kopplungsstation kann eine Kabine von einer zweiten Art von Transportfahrzeugen entkoppelt und mit der Verlagerungseinrichtung gekoppelt und von der Verlagerungseinrichtung entkoppelt und mit der zweiten Art von Transportfahrzeugen gekoppelt werden. Damit kann eine Kabine mit einer Person vorteilhafterweise von unterschiedlichen Arten von Transportfahrzeugen transportiert werden und so für den jeweiligen Einsatzzweck, das jeweilige Ziel oder die jeweils verfügbare Zeit eine passende Art von Transportfahrzeug verwendet werden.

Es sind unterschiedlichste Kombinationen von Arten von Transportfahrzeugen möglich. Die erste Art von Transportfahrzeugen kann beispielsweise als ein Luftfahrzeug und die zweite Art als ein Landfahrzeug in Form eines Strassenfahrzeugs, eines Schienenfahrzeugs oder eines Wasserfahrzeug ausgeführt sein. Es ist beispielsweise auch möglich, dass die erste Art als ein Strassenfahrzeug und die zweite Art als ein Schienenfahrzeug oder Wasserfahrzeug ausgeführt ist. Die Kopplungsstationen sind an die jeweilige Art von Transportfahrzeugen angepasst. Das Transportsystem kann auch Kopplungsstationen für mehr als zwei verschiedene Arten von Transportfahrzeugen aufweisen.

Das genannte Vorsehen von zwei unterschiedlichen Kopplungsstationen kann ohne das Vorsehen eines zweiten, vom ersten Haupt-Verlagerungsweg abweichenden Haupt-Verlagerungswegs der Verlagerungseinrichtung als eigenständige Erfindung angesehen werden. Dabei würde sich ein Personentransportsystem für eine von einem Transportfahrzeug transportierbare Kabine zur Aufnahme wenigstens einer Person ergeben, wobei das Transportfahrzeug und die Kabine koppelbar und entkoppelbar sind, so dass die Kabine in einem mit dem Transportfahrzeug gekoppelten Zustand vom Transportfahrzeug transportiert werden kann. Das Personentransportsystem würde eine an ein Gebäude angebundene Verlagerungseinrichtung aufweisen. Die Verlagerungseinrichtung und die Kabine wären koppelbar und entkoppelbar, so dass die Kabine in einem mit der Verlagerungseinrichtung gekoppelten Zustand von der Verlagerungseinrichtung relativ zum genannten Gebäude auf einem ersten Haupt-Verlagerungsweg verlagert werden könnte. Das Personentransportsystem würde ausserdem über eine erste Kopplungsstation und eine zweite Kopplungsstation verfügen. An der ersten Kopplungsstation könnte eine Kabine von einer ersten Art von Transportfahrzeugen entkoppelt und mit der Verlagerungseinrichtung gekoppelt und von der Verlagerungseinrichtung entkoppelt und mit der ersten Art von Transportfahrzeugen gekoppelt werden. An der zweiten Kopplungsstation könnte eine Kabine von einer zweiten Art von Transportfahrzeugen entkoppelt und mit der Verlagerungseinrichtung gekoppelt und von der Verlagerungseinrichtung entkoppelt und mit der zweiten Art von Transportfahrzeugen gekoppelt werden.

Die oben genannte Aufgabe wird auch von einem Verfahren zum Transportieren einer Person in einer Kabine gelöst, bei welchem die Kabine mit einem Transportfahrzeug gekoppelt und vom Transportfahrzeug mit der Person zu einem Gebäude transportiert wird. Erfindungsgemäss wird die Kabine mit der Person vom Transportfahrzeug entkoppelt, mit einer an das Gebäude angebundene Verlagerungseinrichtung gekoppelt und von der Verlagerungseinrichtung relativ zum genannten Gebäude auf einem ersten Haupt-Verlagerungsweg verlagert. Die Person in der Kabine wird von der Verlagerungseinrichtung zumindest in Richtung ihres Ziels innerhalb des Gebäudes verlagert. Die Verlagerung durch die Verlagerungseinrichtung erfolgt auch auf einem zweiten Haupt-Verlagerungsweg, wobei die genannten Haupt-Verlagerungswege unterschiedliche Haupt-Verlagerungsrichtungen aufweisen. Das Entkoppeln vom Transportfahrzeug und das Koppeln mit der Verlagerungseinrichtung erfolgt an einer so genannten Kopplungsstation und kann dabei gleichzeitig, zeitlich überlappend oder in beliebiger Reihenfolge nacheinander erfolgen.

Die Person kann vor oder nach dem Koppeln der Kabine mit dem Transportfahrzeug in die Kabine einsteigen. Die Kopplung und Entkopplung vom Transportfahrzeug und von der Verlagerungseinrichtung erfolgt insbesondere automatisch, ohne dass die zu transportierende Person aktiv werden müsste. Die notwendige Aktion der genannten Person beschränkt sich insbesondere auf die Angabe eines Ziels, zu dem sie transportiert werden möchte.

Wenn eine Person aus einem Gebäude in einer Kabine ein Ziel ausserhalb der Gebäudes erreichen will, dann begibt sie sich in die Kabine und lässt sich mit der Kabine von der an das Gebäude angebundenen Verlagerungseinrichtung zu einer Kopplungsstation verlagern. Dort wird die Kabine mit einem Transportfahrzeug gekoppelt und von der Verlagerungseinrichtung entkoppelt. Anschliessend wird die Person mit der Kabine vom Transportfahrzeug zu ihrem Ziel oder zumindest in Richtung ihres Ziels transportiert.

In Ausgestaltung der Erfindung wird ein Verfahren zum Transportieren einer Person in einer Kabine vorgeschlagen, bei dem die Kabine in einen Neben-Verlagerungsweg der Verlagerungseinrichtung verlagert wird, wobei der Haupt-Verlagerungsweg, aus dem der genannte Neben-Verlagerungsweg abzweigt, von anderen Kabinen benutzbar bleibt. Die Person verlässt dann die Kabine und die Kabine verbleibt bis zur nächsten Nutzung durch eine Person in dem genannten Neben-Verlagerungsweg. Die Kabine wird damit in dem Neben-Verlagerungsweg geparkt, ohne dass die geparkte Kabine die Nutzung der Verlagerungseinrichtung einschränkt.

Das Vorsehen der vorgenannten Verfahrensschritte kann auch ohne die Verlagerung der Kabine auf einem zweiten Haupt-Verlagerungsweg der Verlagerungseinrichtung als eigenständige Erfindung angesehen werden. Dabei würde sich ein Verfahren zum Transportieren einer Person in einer Kabine ergeben, bei welchem die Kabine mit einem Transportfahrzeug gekoppelt und vom Transportfahrzeug mit der Person zu einem Gebäude transportiert wird. Die Kabine mit der Person würde vom Transportfahrzeug entkoppelt, mit einer an das Gebäude angebundene Verlagerungseinrichtung gekoppelt und von der Verlagerungseinrichtung relativ zum genannten Gebäude auf einem ersten Haupt-Verlagerungsweg verlagert werden. Die Person in der Kabine würde von der Verlagerungseinrichtung zumindest in Richtung ihres Ziels innerhalb des Gebäudes verlagert werden. Die Kabine würde in einen Neben-Verlagerungsweg der Verlagerungseinrichtung verlagert werden, wobei der Haupt-Verlagerungsweg, aus dem der genannte Neben-Verlagerungsweg abzweigt, von anderen Kabinen benutzbar bleiben würde. Die Person würde dann die Kabine verlassen und die Kabine würde bis zur nächsten Nutzung durch eine Person in dem genannten Neben-Verlagerungsweg verbleiben.

In Ausgestaltung der Erfindung wird ein Verfahren zum Transportieren einer Person in einer Kabine vorgeschlagen, bei dem das Transportfahrzeug nach dem Entkoppeln von der Kabine in ein Lager gebracht wird und bis zur nächsten Nutzung dem genannten Lager verbleibt. Damit können Transportfahrzeuge, welche eine Kabine an die Verlagerungseinrichtung für die weitere Verlagerung relativ zum Gebäude übergeben haben, sicher gelagert werden.

Das Lager kann als ein Parkplatz, insbesondere innerhalb des Gebäudes ausgeführt sein, welcher von dem Transportfahrzeug selbstständig angefahren wird.

Das Vorsehen der vorgenannten Verfahrensschritte kann auch ohne die Verlagerung der Kabine auf einem zweiten Haupt-Verlagerungsweg der Verlagerungseinrichtung als eigenständige Erfindung angesehen werden. Dabei würde sich ein Verfahren zum Transportieren einer Person in einer Kabine ergeben, bei welchem die Kabine mit einem Transportfahrzeug gekoppelt und vom Transportfahrzeug mit der Person zu einem Gebäude transportiert wird. Die Kabine mit der Person würde vom Transportfahrzeug entkoppelt, mit einer an das Gebäude angebundene Verlagerungseinrichtung gekoppelt und von der Verlagerungseinrichtung relativ zum genannten Gebäude auf einem ersten Haupt-Verlagerungsweg verlagert werden. Die Person in der Kabine würde von der Verlagerungseinrichtung zumindest in Richtung ihres Ziels innerhalb des Gebäudes verlagert werden. Das Transportfahrzeug würde nach dem Entkoppeln von der Kabine in ein Lager gebracht werden und bis zur nächsten Nutzung dem genannten Lager verbleiben.

Es wird darauf hingewiesen, dass einige der möglichen Merkmale und Vorteile der Erfindung hierin mit Bezug auf unterschiedliche Ausführungsformen des erfindungsgemässen Personentransportsystems einerseits und des erfindungsgemässen Verfahrens andererseits beschrieben sind. Ein Fachmann erkennt, dass die Merkmale in geeigneter Weise kombiniert, angepasst, übertragen oder ausgetauscht werden können, um zu weiteren Ausführungsformen der Erfindung zu gelangen. In anderen Worten lassen sich beispielsweise unter Bezugnahme auf das Personentransportsystem genannte Merkmale auch als Verfahrensschritte implementieren, und umgekehrt.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu.

Dabei zeigen:
- Fig. 1: ein Personentransportsystem für ein Transportfahrzeug und eine Kabine mit einer an ein Gebäude angebundenen Verlagerungseinrichtung,
- Fig. 2: ein alternatives Personentransportsystem mit einer Verlagerungseinrichtung mit zwei Kopplungsstationen für verschiedene Arten von Transportfahrzeugen für eine Kabine,
- Fig. 3: einen Ausschnitt aus einer Verlagerungseinrichtung mit einer Kabine vor einem Wechsel von einem ersten Haupt-Verlagerungsweg in einen zweiten Haupt-Verlagerungsweg in einer Draufsicht,
- Fig. 4: den Ausschnitt aus Fig. 2 in einer Sicht von oben,
- Fig. 5: den Ausschnitt aus Fig. 3 nach dem Wechsel der Kabine vom ersten Haupt-Verlagerungsweg in den zweiten Haupt-Verlagerungsweg,
- Fig. 6: einen der Fig. 3 entsprechenden Ausschnitt eines alternativen Ausführungsbeispiels einer Verlagerungseinrichtung,
- Fig. 7: den Ausschnitt aus Fig. 6 nach dem Wechsel der Kabine vom ersten Haupt-Verlagerungsweg in den zweiten Haupt-Verlagerungsweg,
- Fig. 8: einen der Fig. 4 entsprechenden Ausschnitt eines weiteren alternativen Ausführungsbeispiels einer Verlagerungseinrichtung,
- Fig. 9: den Ausschnitt aus Fig. 8 nach dem Wechsel der Kabine vom ersten Haupt-Verlagerungsweg in den zweiten Haupt-Verlagerungsweg,
- Fig. 10: einen Ausschnitt eines weiteren alternativen Ausführungsbeispiels einer Verlagerungseinrichtung mit einem Verlängerungselement des zweiten Haupt-Verlagerungswegs in seiner inaktiven Position,
- Fig. 11: den Ausschnitt aus Fig. 10 mit dem Verlängerungselement in seiner aktiven Position,
- Fig. 12: einen Ausschnitt eines weiteren alternativen Ausführungsbeispiels einer Verlagerungseinrichtung mit einem alternativen Verlängerungselement des zweiten Hauptverlagerungselements in seiner inaktiven Position und
- Fig. 13: den Ausschnitt aus Fig. 12 mit dem alternativen Verlängerungselement in seiner aktiven Position.

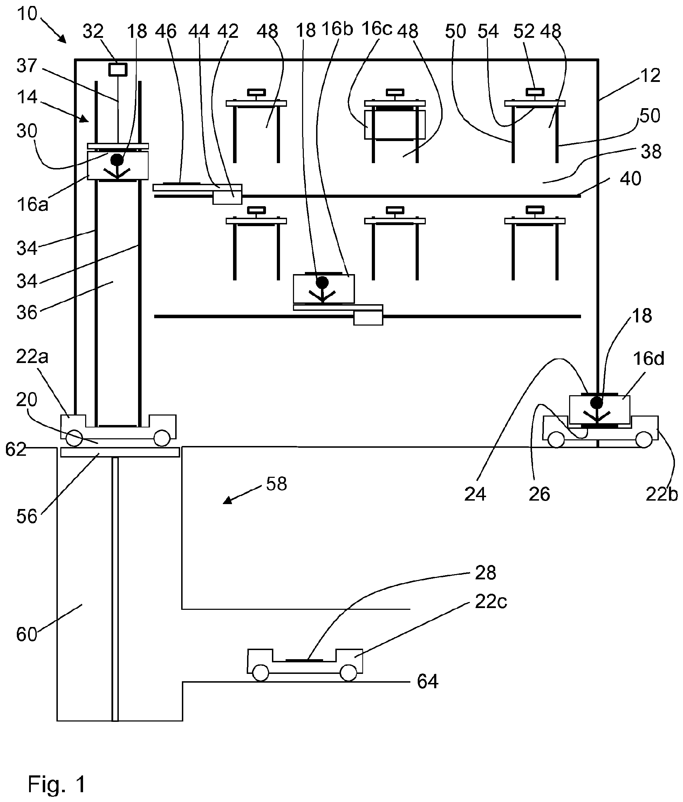

Gemäss Fig. 1 weist ein Personentransportsystem 10 eine an ein Gebäude 12 angebundene Verlagerungseinrichtung 14 auf. Mittels der Verlagerungseinrichtung 14 können Kabinen 16a - 16d in einem mit der Verlagerungseinrichtung 14 gekoppelten Zustand aussen an dem Gebäude 12 entlang und damit relativ zum Gebäude 12 verlagert werden. Die identisch aufgebauten Kabinen 16a - 16d können Personen 18 aufnehmen, welche in bzw. mit den Kabinen 16a - 16d transportiert werden können.

Eine Kabine 16a - 16d kann an einer Kopplungsstation 20 mit der Verlagerungseinrichtung 14 gekoppelt und von ihr entkoppelt werden. Die Kabinen 16a - 16d können mit identisch ausgeführten und elektrisch angetriebenen Transportfahrzeugen 22a - 22c in Form von autonomen und damit fahrerlosen Strassenfahrzeugen zur Kopplungsstation 20 hin und von ihr weg transportiert werden. Dazu kann jeweils eine Kabine 16a - 16d mit einem der Transportfahrzeuge 22a - 22c gekoppelt und auch wieder entkoppelt werden. Die jeweilige Kabine 16a - 16d kann im mit einem Transportfahrzeug 22a - 22c gekoppelten Zustand von diesem transportiert und im entkoppelten Zustand unabhängig von einem Transportfahrzeug 22a - 22c beispielsweise mit der Verlagerungseinrichtung 14 transportiert bzw. verlagert werden. Eine Person 18 kann damit in einer der Kabinen 16a - 16d von einem der Transportfahrzeuge 22a - 22c an ein beliebiges Ziel ausserhalb des Gebäudes 14 transportiert werden.

Die Kabinen 16a - 16d verfügen über zwei kabinenseitige Kopplungskomponenten in Form von magnetisierbaren Metallplatten. Jede Kabine 16a - 16d weist an ihrer Oberseite eine erste kabinenseitige Kopplungskomponente 24 und an ihrer Unterseite eine zweite kabinenseitige Kopplungskomponente 26 auf. Die Transportfahrzeuge 22a - 22c weisen jeweils eine fahrzeugseitige Kopplungskomponente 28 in Form eines ansteuerbaren Elektromagneten auf. Die Transportfahrzeuge 22a - 22c sind so ausgeführt, dass eine Kabine 16a - 16d von oben auf die fahrzeugseitige Kopplungskomponente 28 aufgesetzt werden kann. Wird bei aufgesetzter Kabine 16a - 16d der genannten Elektromagnet des Transportfahrzeugs 22a - 22c aktiviert, so zieht er die zweite kabinenseitige Kopplungskomponente 26 an, womit eine Kopplung zwischen dem Transportfahrzeug 22a - 22c und der Kabine 16a - 16d hergestellt ist. In der Fig. 1 ist das Transportfahrzeug 22b mit der Kabine 16d gekoppelt und auf dem Weg zur Kopplungsstation 20, um die Kabine 16d an die Verlagerungseinrichtung 14 zu übergeben.

Das Transportfahrzeug 22a befindet sich an der Kopplungsstation 20 ohne eine Kabine. Es hatte zuvor die Kabine 16a an die Kopplungsstation 20 transportiert und an die Verlagerungseinrichtung 14 übergeben. Bei der genannten Übergabe der Kabine 16a vom Transportfahrzeug 22a an die Verlagerungseinrichtung 14 war zunächst die Kabine 16a wie beschrieben mit dem Transportfahrzeug 22a mittels der zweiten kabinenseitigen Kopplungskomponente 26 und der fahrzeugseitigen Kopplungskomponente 28 gekoppelt.

Die Verlagerungseinrichtung 14 weist eine erste einrichtungsseitige Kopplungskomponente 30 in Form eines ansteuerbaren Elektromagneten auf, welche an einem in der Fig. 1 nicht sichtbaren Rahmen so angeordnet ist, dass er mit der ersten kabinenseitigen Kopplungskomponente 24 gekoppelt werden kann. Dazu wird die erste einrichtungsseitige Kopplungskomponente 30 mittels eines ersten Antriebs 32 in Form einer Winde geführt von horizontal beabstandeten Führungsschienen 34 vertikal so weit in Richtung Kopplungsstation 20 verlagert, dass sich die erste einrichtungsseitige Kopplungskomponente 30 in Form des Elektromagnets und die erste kabinenseitige Kopplungskomponente 24 in Form der Metallplatte berühren oder nur noch einen minimalen Abstand aufweisen. Durch Aktivierung des Elektromagnets wird eine Kopplung der ersten einrichtungsseitigen Kopplungskomponente 30 und der ersten kabinenseitigen Kopplungskomponente 24 und damit der Verlagerungseinrichtung 14 und der Kabine 16a hergestellt. Zur Sicherung der genannten Kopplung kann zusätzlich eine mechanische Kopplung in Form einer formschlüssigen Verbindung hergestellt werden.

Nachdem die erste einrichtungsseitige Kopplungskomponente 30 und damit die Verlagerungseinrichtung 14 mit der Kabine 16a gekoppelt war, wurde die fahrzeugseitige Kopplungskomponente 28 und damit das Transportfahrzeug 22a von der Kabine 16a entkoppelt, indem der genannte Elektromagnet des Transportfahrzeugs 22a deaktiviert wird. Nach dieser Entkopplung von Kabine 16a und Transportfahrzeug 22a konnte die mit der ersten einrichtungsseitigen Kopplungskomponente 30 gekoppelte Kabine 16a entlang eines von Führungsschienen 34 definierten, vertikal verlaufenden ersten Haupt-Verlagerungsweg 36 verlagert werden. Dazu ist der erste Antrieb 32 mittels eines Tragmittels 37 in Form eines Seils mit dem die erste einrichtungsseitige Kopplungskomponente 30 haltenden Rahmen verbunden. In Fig. 1 ist ein Zustand dargestellt, in dem die Kabine 16a in eine Wechselposition verlagert wurde, in der ein Wechsel bzw. eine Übergabe der Kabine 16a vom ersten, vertikal verlaufenden Haupt-Verlagerungsweg 36 in einen zweiten, horizontal verlaufenden Haupt-Verlagerungsweg 38 durchgeführt werden kann.

Der zweite Haupt-Verlagerungsweg 38 der Verlagerungseinrichtung 14 wird von zwei auf einem Vorsprung des Gebäudes 12 angeordneten Schienen 40 definiert, von denen in der Fig. 1 nur eine Schiene sichtbar ist. Ein zweiter Antrieb 42 in Form eines Reibradantriebs kann sich auf den Schienen 40 hin- und her bewegen. Der zweite Antrieb 42 ist mit einem Rahmen 44 verbunden, der sich vom zweiten Antrieb 42 in Richtung des ersten Haupt-Verlagerungswegs 36 erstreckt und eine nach oben ausgerichtete zweite einrichtungsseitige Kopplungskomponente 46 in Form eines Elektromagneten trägt. Der Rahmen 44 und die zweite einrichtungsseitige Kopplungskomponente 46 sind so angeordnet, dass durch eine Bewegung des zweiten Antriebs 42 in Richtung des ersten Haupt-Verlagerungswegs 36 die zweite einrichtungsseitige Kopplungskomponente 46 so in den ersten Haupt-Verlagerungsweg 36 hineinragt, dass sie unterhalb der zweiten kabinenseitigen Kopplungskomponente 26 angeordnet ist. Die Kabine 16a kann damit vom ersten Antrieb 32 auf der zweiten einrichtungsseitigen Kopplungskomponente 46 abgesetzt werden kann. Anschliessend wird durch Aktivierung der zweiten einrichtungsseitigen Kopplungskomponente 46 in Form des Elektromagneten eine Kopplung der zweiten einrichtungsseitigen Kopplungskomponente 46 mit der zweiten kabinenseitigen Kopplungskomponente 26 und damit mit der Kabine 16a hergestellt. Nach erfolgter Kopplung der zweiten einrichtungsseitigen Kopplungskomponente 46 mit der Kabine 16a wird die Kopplung der ersten einrichtungsseitigen Kopplungskomponente 30 mit der Kabine 16a gelöst und die Kabine 16a kann mittels des zweiten Antriebs 42 horizontal auf dem zweiten Haupt-Verlagerungsweg 38 verlagert werden. Der beschriebene Wechsel der Kabine 16a vom ersten Haupt-Verlagerungsweg 36 in den zweiten Haupt-Verlagerungsweg 38 kann auch als eine Übergabe der Kabine vom ersten auf den zweiten Haupt-Verlagerungsweg bezeichnet werden.

Vom zweiten Haupt-Verlagerungsweg 38 zweigen insgesamt drei, horizontal versetzt nebeneinander angeordnete Neben-Verlagerungswege 48 vertikal nach oben ab. Die drei Neben-Verlagerungswege 48 werden von jeweils zwei vertikal verlaufenden und horizontal beabstandeten Führungsschienen 50 definiert. Mittels eines dritten Antriebs 52 kann eine dritte einrichtungsseitige Kopplungskomponente 54 vertikal entlang der Führungsschienen 50 verlagert werden. Der dritte Antrieb 52 und die dritte einrichtungsseitige Kopplungskomponente 54 sind grundsätzlich identisch mit dem ersten Antrieb 32 und der ersten einrichtungsseitigen Kopplungskomponente 30 aufgebaut, so dass auch ihre Wirkungsweise identisch ist. Die dritte einrichtungsseitige Kopplungskomponente 54 kann damit ebenfalls mit einer ersten kabinenseitigen Kopplungskomponente 24 und damit mit einer Kabine 16a - 16d gekoppelt werden. Dazu muss die Kabine 16a - 16d mittels des zweiten Antriebs 42 in eine mit einem Neben-Verlagerungsweg 50 fluchtende Position verlagert werden. Anschliessend kann die dritte einrichtungsseitige Kopplungskomponente 54 mittels des dritten Antriebs 52 in eine Position gebracht werden, in der eine Kopplung mit der ersten kabinenseitigen Kopplungskomponente 24 und damit mit der Kabine 16a - 16d hergestellt werden kann. Nach Herstellung dieser Kopplung wird die Kabine 16a - 16d von der zweiten einrichtungsseitigen Kopplungskomponente 46 entkoppelt und die Kabine 16a - 16d kann mittels des dritten Antriebs 52 nach oben auf dem Neben-Verlagerungsweg 48 und damit aus dem zweiten Haupt-Verlagerungsweg 38 in eine Parkposition verlagert werden. Die Kabine 16c in Fig. 1 befindet sich in einer solchen Parkposition, aus der ein direkter Zugang zu einer Wohnung oder eines sonstigen Ziels im Gebäude 12 der Person 18 möglich ist. Wenn sich eine Kabine 16a - 16d in einer solchen Parkposition auf einem Neben-Verlagerungsweg 48 befindet, kann der zweite Haupt-Verlagerungsweg 38, von dem der Neben-Verlagerungsweg 48 abzweigt, von einer anderen Kabine 16a - 16d genutzt werden. Die Neben-Verlagerungswege 48 sind also so ausgeführt und angeordnet, dass sie eine Kabine 16a - 16d so aufnehmen können und dass der zweite Haupt-Verlagerungsweg 38, aus dem der entsprechende Neben-Verlagerungsweg 48 abzweigt, bei einer im entsprechenden Neben-Verlagerungsweg 50 aufgenommenen Kabine 16a - 16d von einer anderen Kabine 16a - 16d benutzbar ist.

Unterhalb des beschriebenen zweiten Haupt-Verlagerungswegs 38 ist ein identisch aufgebauter zweiter Haupt-Verlagerungsweg mit ebenfalls drei Neben-Verlagerungswegen angeordnet. Im in Fig. 1 dargestellten Zustand wird die Kabine 16b auf diesem zweiten Haupt-Verlagerungsweg zu einem Neben-Verlagerungsweg verlagert, um dort in ihre Parkposition gebracht zu werden.

Ein oder mehrere Neben-Verlagerungswege können auch vom ersten, insbesondere vertikal verlaufenden Haupt-Verlagerungsweg abzweigen.

Wenn eine Person 18 aus dem Gebäude 12 ein Ziel ausserhalb des Gebäudes 12 in einer Kabine 16a - 16d erreichen will. So steigt sie aus dem Gebäude 12, beispielsweise aus ihrer Wohnung in eine an einer entsprechenden Parkposition angeordneten Kabine 16a - 16d und wird mit der Kabine 16a - 16d über den entsprechenden Neben-Verlagerungsweg 48, den entsprechenden zweiten Haupt-Verlagerungsweg 38 und den ersten Haupt-Verlagerungsweg 36 in die Kopplungsstation 20 verlagert und einem Transportfahrzeug 22a - 22c übergeben. Die Kopplungen und Entkopplungen zwischen den einzelnen Kopplungskomponenten laufen dabei hauptsächlich in umgekehrter Reihenfolge wie bei der oben beschriebenen Verlagerung einer Kabine 16a - 16d von der Kopplungsstation 20 in eine Parkposition in einem Neben-Verlagerungsweg 48.

Wenn sich ein Transportfahrzeug wie das Transportfahrzeug 22a in Fig, 1 in der Kopplungsstation 20 befindet, so steht es auf einer Aufzugsplattform 56 eines Aufzugs 58. Der Aufzug 58 verfügt über einen vertikal verlaufenden Aufzugschacht 60, in welchem die Aufzugsplattform 56 mittels eines nicht weiter dargestellten Antriebs, beispielsweise eines hydraulischen Antriebs, vertikal verlagert werden kann. Der Aufzugschacht 60 ist dabei fluchtend zum ersten Haupt-Verlagerungsweg 36 der Verlagerungseinrichtung 14 angeordnet. Ein auf der Aufzugsplattform 56 stehendes Transportfahrzeug kann damit vom Aufzug 58 direkt von der Kopplungsstation 20 weg oder zur Kopplungsstation 20 verlagert werden.

Ein Transportfahrzeug 22a - 22c kann vom Aufzug 58 von einer Anlieferungsebene 62, auf der die Kopplungsstation 20 angeordnet ist, auf eine Lagerungsebene 64 und umgekehrt verlagert werden. Die Lagerungsebene 64 kann auch als ein Lager angesehen werden. Auf der Lagerungsebene 64, auf der sich im in Fig. 1 dargestellten Zustand das Transportfahrzeug 22c befindet, kann ein Transportfahrzeug 22a - 22c zu einem nicht dargestellten Parkplatz fahren und dort auf seinen nächsten Einsatz, also bis zur nächsten Nutzung warten. Der Parkplatz kann dabei als ein Lager bezeichnet werden. Dabei können beispielsweise Batterien des Transportfahrzeugs 22a - 22c geladen werden. Wenn ein auf dem genannten Parkplatz befindliches Transportfahrzeug 22a - 22c eine Kabine 16a - 16d transportieren soll, dann fährt es auf die auf der Verlagerungsebene 64 positionierte Aufzugsplattform 56 und lässt sich vom Aufzug 58 zur Kopplungsstation 20 verlagern, wo es mit einer Kabine 16a - 16d gekoppelt werden kann.

Die Kabinen 16a - 16d, die Transportfahrzeuge 22a - 22c, die Verlagerungseinrichtung 14 und der Aufzug 58 weisen nicht dargestellte Steuerungseinrichtungen auf, welche mit einer ebenfalls nicht dargestellten zentralen Steuerungseinrichtung in Kommunikationsverbindung stehen. Die zentrale Steuerungseinrichtung sendet Aufträge an die einzelnen Steuerungseinrichtungen, welche von diesen selbsttätig umgesetzt werden. Eine Person 18, welche in einer Kabine 16a - 16d transportiert werden möchte, muss der zentralen Steuerungseinrichtung lediglich ihr Ziel und gegebenenfalls ihren Standort, beispielsweise über ein Smartphone übermitteln. Die zentrale Steuerungseinrichtung setzt diesen Transportwunsch in Aufträge an die daran beteiligten Komponenten um. Die Aufgabenverteilung zwischen der zentralen Steuerungseinrichtung und den einzelnen Steuerungseinrichtung kann dabei beliebig gewählt werden.

Es ist auch möglich, dass nicht nur identische, sondern auch unterschiedliche Transportfahrzeuge verwendet werden. Die Transportfahrzeuge können sich in ihrer Ausgestaltung, ihrer Grösse, ihrer Antriebsart oder auch in ihrer Art, beispielsweise Strassenfahrzeuge und Schienenfahrzeuge unterscheiden. Ebenso ist es möglich, dass nicht nur identische Kabinen verwendet werden. Dabei kann die Verlagerungseinrichtung so ausgeführt sein, dass sie unterschiedliche Kabinen verlagern kann. Es ist aber auch möglich, dass es unterschiedliche Verlagerungseinrichtungen für unterschiedliche Kabinen gibt. Ebenso sind andere Arten von Kopplungen zwischen Kabine und Transportfahrzeug und Kabine und Verlagerungseinrichtung, sowie andere Antriebe der Verlagerungseinrichtung möglich. Der beschriebene Aufzug für die Transportfahrzeuge, sowie die zweiten Haupt-Verlagerungswege sind nicht zwingend notwendig.

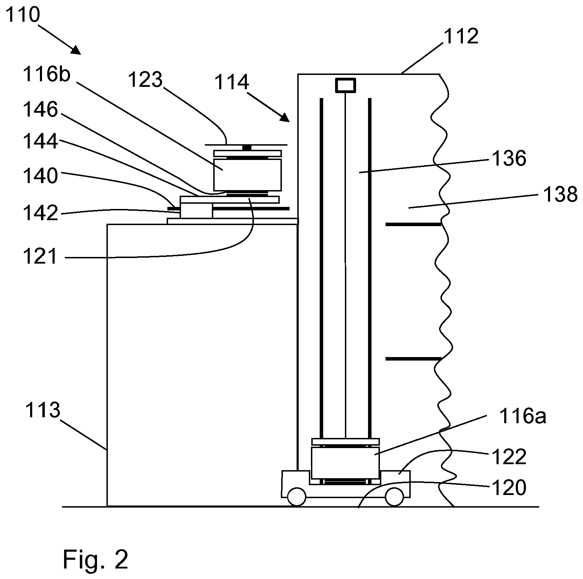

Das in Fig. 2 dargestellte Personentransportsystem 110 ist vergleichbar mit dem Personentransportsystem 10 aus Fig. 1 aufgebaut, weshalb nur auf die Unterschiede zwischen den Personentransportsystemen 10 und 110 eingegangen wird. Das Personentransportsystem 110 in Fig. 2 weist ebenfalls eine an ein Gebäude 112 angebundene Verlagerungseinrichtung 114, wobei in Fig. 2 nur ein Teil des Gebäudes 112 und der Verlagerungseinrichtung 114 dargestellt ist. Das Personentransportsystem 110 weist keinen Aufzug für Transportfahrzeuge auf. Es verfügt über zwei Kopplungsstationen, wobei eine erste Kopplungsstation 120 identisch mit der Kopplungsstation 20 aus Fig. 1 ausgeführt ist. An der ersten Kopplungsstation 120 kann damit wie zu Fig. 1 beschrieben eine Übergabe einer Kabine 116a von einem Transportfahrzeug 122 in Form eines Strassenfahrzeugs zur Verlagerungseinrichtung 114 und umgekehrt stattfinden. Ein derartiges Strassenfahrzeug repräsentiert damit eine erste Art von Transportfahrzeugen.

Eine zweite Kopplungsstation 121 ist auf einem Dach eines Anbaus 113 an das Gebäude 112 angeordnet. Die zweite Kopplungsstation 121 ist dazu vorgesehen, eine Übergabe einer Kabine 116b an die Verlagerungseinrichtung 114 zu ermöglichen. Dazu sind auf dem Anbau 113 horizontal verlaufende Schienen 140 angeordnet, auf welchen ein vierter Antrieb 142 zusammen mit einem Rahmen 144 und einer Kopplungskomponente 146 horizontal verlagert werden. Die Schienen 140, der vierte Antrieb, der Rahmen 144 und die Kopplungskomponente 146 sind dabei analog den Schienen 40, dem zweiten Antrieb 142, dem Rahmen 144 und der zweiten einrichtungsseitigen Kopplungskomponente 46 ausgeführt und funktionieren entsprechend. Damit kann die Kopplungskomponente 146 in den ersten Haupt-Verlagerungsweg 136 der Verlagerungseinrichtung 114 verlagert werden.

Die Kabine 116b kann damit von einem Transportfahrzeug 121 in Form einer Drohne über die Luft zur zweiten Kopplungsstation 121 transportiert und auf der Kopplungskomponente 146 abgesetzt werden. Eine derartige Drohne repräsentiert damit eine zweite Art von Transportfahrzeugen. Anschliessend wird die Kabine 116b in den ersten Haupt-Verlagerungsweg 136 verlagert und wie in Zusammenhang mit Fig. 1 beschrieben mit der Verlagerungseinrichtung 114 gekoppelt. Danach wird die Kabine 116b von der Kopplungskomponente 146 entkoppelt und die Kopplungskomponente 146 aus dem ersten Haupt-Verlagerungsweg 136 heraus verlagert, womit die Kabine von der Verlagerungseinrichtung 114 relativ zum Gebäude 112 verlagert werden kann. Eine Übergabe einer Kabine 116a, 116b von der Verlagerungseinrichtung 114 zu einem Transportfahrzeug 121 in Form einer Drohne verläuft in umgekehrter Reihenfolge.

Es ist auch möglich, dass das Transportfahrzeug in Form einer Drohne die Kabine direkt zum ersten Haupt-Verlagerungsweg transportiert und dort mit der Verlagerungseinrichtung gekoppelt wird. Dies ist auch möglich, wenn Kabinen nur von einer Art von Transportfahrzeugen in Form von Drohnen zur Verlagerungseinrichtung und von ihr weg transportiert werden. In diesem Fall kann eine Kabine von einer Drohne von oben auf einer ersten einrichtungsseitige Kopplungskomponente der Verlagerungseinrichtung abgesetzt werden.

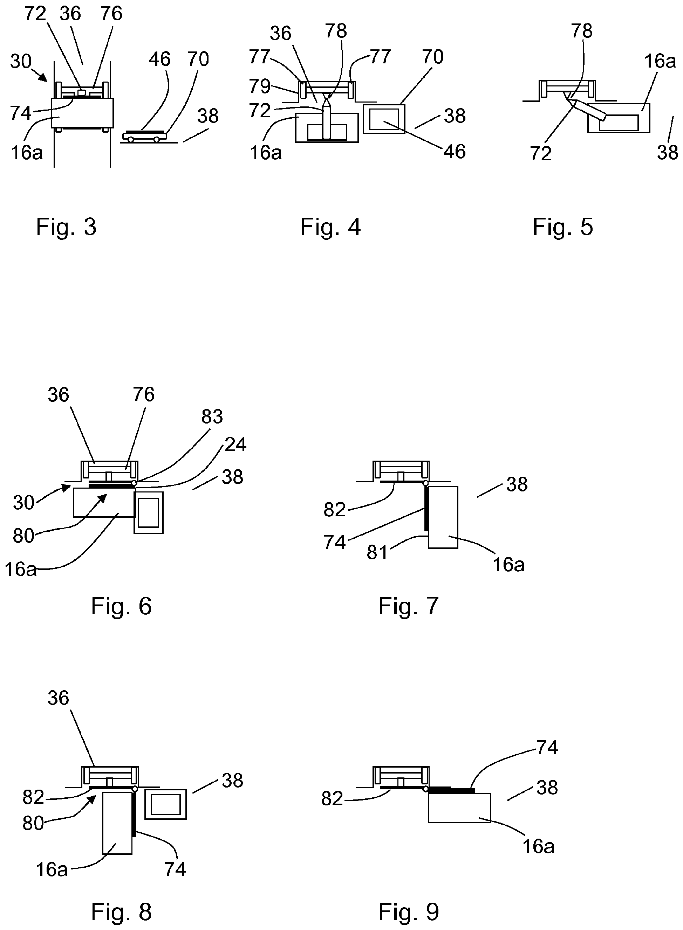

Die folgenden Fig. 3 - 13 betreffen alle die für eine Übergabe einer Kabine 16a vom ersten Haupt-Verlagerungsweg 36 auf den zweiten Haupt-Verlagerungsweg 38 einer an ein Gebäude angebundene Verlagerungseinrichtung notwendigen Komponenten. Aus diesem Grund ist jeweils nur ein Ausschnitt des ersten Haupt-Verlagerungswegs 36 und des zweiten Haupt-Verlagerungswegs 38 mit den dort angeordneten Komponenten dargestellt. Die Kopplungskomponenten zur Kopplung einer Kabine mit der Verlagerungseinrichtung sind identisch zum Personentransportsystem in Fig. 1 ausgeführt, weshalb darauf nicht weiter eingegangen wird.

Gemäss Fig. 3, 4 und 5 weist die Verlagerungseinrichtung einen Wagen 70 auf, der sich auf dem als einen Vorsprung am Gebäude ausgeführten zweiten Haupt-Verlagerungsweg 38 mit einem eigenen, nicht dargestellten Antrieb verfahren kann. Der Wagen 70 weist eine zweite einrichtungsseitige Kopplungskomponente 46 auf, welche mit der aus Fig. 1 identisch ist. Damit kann die Kabine 16a von oben auf den Wagen 70 aufgesetzt, der Wagen 70 und die Kabine 16a gekoppelt und anschliessend die Kabine 16a vom Wagen 70 auf dem zweiten Haupt-Verlagerungsweg 38 verlagert werden.

Die erste einrichtungsseitige Kopplungskomponente 30 weist einen hauptsächlich horizontal verlaufenden Tragarm 72 auf, welcher den Elektromagnet 74 mit einem Rahmen 76 verbindet. Der Rahmen 76 rollt beim Verlagern auf dem ersten Haupt-Verlagerungsweg 36 auf Rollen 77 in einer Nische 79 des Gebäudes ab und wird in dieser Nische 79 geführt. Der Tragarm 72 ist um eine vertikal verlaufende Schwenkachse 78 verschwenkbar, wobei die Schwenkachse 78 in der Nische 79 verläuft.

In den Fig. 3 und 4 befindet sich die Kabine 16a auf dem ersten Haupt-Verlagerungsweg 36, wobei die Fig. 3 eine Draufsicht und die Fig. 4 eine Sicht von oben zeigt. Um die Kabine 16a vom ersten Haupt-Verlagerungsweg 36 auf den zweiten Haupt-Verlagerungsweg 38 zu übergeben, wird der Tragarm 72 mit einem nicht dargestellten Antrieb um die Schwenkachse 78 in Richtung zweitem Haupt-Verlagerungsweg 38 so weit verschwenkt, bis die Kabine 16a oberhalb des Wagens 70 angeordnet ist und damit auf dem Wagen 70 abgesetzt und mit ihm gekoppelt werden kann. Dieser Zustand ist in Fig. 5 in einer Sicht von oben dargestellt. Die Übergabe einer Kabine 16a vom zweiten Haupt-Verlagerungsweg 38 auf den ersten Haupt-Verlagerungsweg 36 läuft in umgekehrter Reihenfolge.

Die in Fig. 6 und 7 dargestellten Komponenten unterscheiden sich von denen in Fig. 4 und 5 lediglich durch die Orientierung des ersten Elektromagneten 74 der ersten einrichtungsseitigen Kopplungskomponente 30, deren Anbindung an den Rahmen 76, sowie durch die Orientierung und Anordnung der ersten kabinenseitigen Kopplungskomponente 24. In Fig. 6 befindet sich die Kabine 16a auf dem ersten Haupt-Verlagerungsweg 36 und in Fig. 7 auf dem zweiten Haupt-Verlagerungsweg.

Die erste einrichtungsseitige Kopplungskomponente weist ein Halteelement 80 auf, welches mit der an einer sich hauptsächlich senkrecht erstreckenden Seitenfläche 81 der Kabine 16a angeordneten ersten kabinenseitigen Kopplungskomponente 24 koppelbar ist. Das Haltelement 80 weist ein gebäudeseitiges Teil 82 und ein kabinenseitiges Teil in Form des Elektromagneten 74 auf. Das gebäudeseitige Teil 82 ist unbeweglich mit dem Rahmen 76 verbunden. Der Elektromagnet 74 ist mit einem Scharnier 83 mit dem gebäudeseitigen Teil 82 verbunden. Wenn sich die Kabine 16a auf dem ersten Haupt-Verlagerungsweg 36 befindet, so sind die beiden Teile 74, 82 des Haltelements 80 parallel zueinander angerordnet. Der Elektromagnet 74 ist um eine vertikale, durch das Scharnier 83 verlaufende Schwenkachse um 90° verschwenkbar. Der mit der Kabine 16a gekoppelte Elektromagnet 74 kann mit einem nicht dargestellten Antrieb vom gebäudeseitigen Teil 82 und damit vom Gebäude weg verschwenkt oder zum gebäudeseitigen Teil 82 und damit zum Gebäude hin verschwenkt werden.

Damit kann die Kabine 16a vom ersten Haupt-Verlagerungsweg 36 auf den zweiten Haupt-Verlagerungsweg 38 und umgekehrt verlagert und damit übergeben werden.

Die in Fig. 8 und 9 dargestellten Komponenten unterscheiden sich von denen in Fig. 6 und 7 lediglich durch die Anordnung der beiden Teile des Haltelements 80 zueinander. In Fig. 8 befindet sich die Kabine 16a auf dem ersten Haupt-Verlagerungsweg 36. In diesem Ausführungsbeispiel schliessen dabei der Elektromagnet 74 und das gebäudeseitige Teil 82 einen Winkel von 90° ein, wobei der Elektromagnet 74 vom Gebäude weg orientiert ist. In Fig. 9 befindet sich die Kabine 16a auf dem zweiten Haupt-Verlagerungsweg 38. Dabei schliessen der Elektromagnet 74 und der gebäudeseitige Teil 82 des Haltelements 80 einen Winkel von 180° ein.

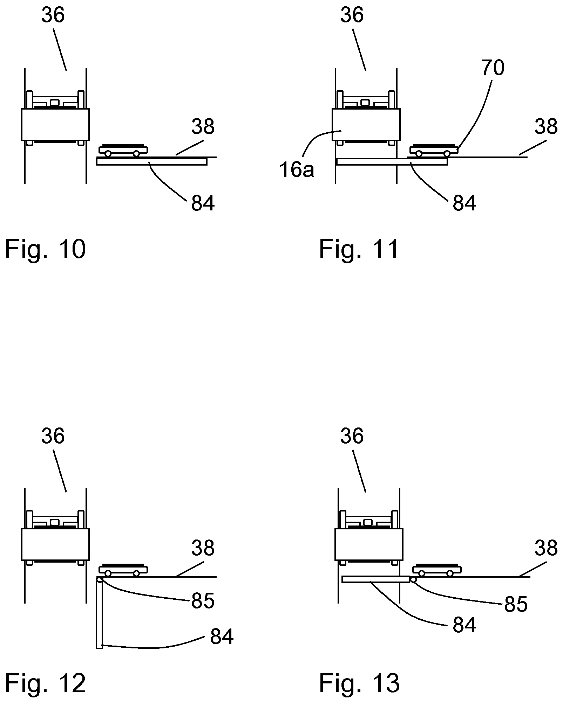

In den Fig. 10 und 11 ist ein Ausführungsbeispiel dargestellt, bei welchem der zweite Haupt-Verlagerungsweg 38 ein bewegliches Verlängerungselement 84 in Form einer Platte aufweist. Das Verlängerungselement 84 ist so ausgeführt und angeordnet, dass mittels des Verlängerungselements 84 der zweite Haupt-Verlagerungsweg 38 in den ersten Haupt-Verlagerungsweg 36 hinein verlängert werden kann.

In Fig. 10 ist das Verlängerungselement 84 in seiner inaktiven Position dargestellt, in der es den zweiten Haupt-Verlagerungsweg 38 nicht in den ersten Haupt-Verlagerungsweg 36 hinein verlängert. In dieser inaktiven Position ist das Verlängerungselement 84 unterhalb des zweiten Haupt-Verlagerungswegs 38 angeordnet. Durch eine horizontale Verschiebung des Verlängerungselements 84 in Richtung erstem Haupt-Verlagerungsweg 36 mittels eines nicht dargestellten Antriebs wird das Verlängerungselement 84 in seine aktive, in Fig. 11 dargestellte Position gebracht. In dieser aktiven Position des Verlängerungselements 84 kann der Wagen 70 über das Verlängerungselement 70 unter die Kabine 16a verlagert werden. Anschliessend kann die Kabine 16a auf dem Wagen 70 abgesetzt und mit ihm gekoppelt werden, so dass sie vom Wagen 70 auf dem zweiten Haupt-Verlagerungsweg 38 verlagert werden kann. Sobald die Kabine 16a aus dem ersten Haupt-Verlagerungsweg 36 heraus verlagert worden ist, wird das Verlängerungselement 84 wieder in seine inaktive Position gebracht, so dass der erste Haupt-Verlagerungsweg 36 für die Verlagerung einer weiteren Kabine genutzt werden kann. Eine Übergabe einer Kabine 16a vom zweiten Haupt-Verlagerungsweg 38 auf den ersten Haupt-Verlagerungsweg 36 läuft in umgekehrter Reihenfolge ab.

In den Fig. 12 und 13 ist ein weiteres, dem in den Fig. 10 und 11 dargestellten Ausführungsbeispiel sehr ähnliches Ausführungsbeispiel dargestellt. Der Unterschied besteht lediglich darin, dass das Verlängerungselement 84 über ein horizontal und quer zum zweiten Haupt-Verlagerungsweg 38 orientiertes Scharnier 85 mit dem zweiten Haupt-Verlagerungsweg 38 verbunden ist. Wie in Fig. 12 dargestellt, verläuft das Verlängerungselement 84 in seiner inaktiven Position vertikal nach unten und kann durch ein Verschwenken um das genannte Scharnier 85 in seine in Fig. 13 dargestellte aktive Position gebracht werden, in der es in den ersten Haupt-Verlagerungsweg 36 hinein ragt.

Abschliessend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Personentransportsystem für
eine von einem Transportfahrzeug (22a, 22b, 22c, 122) transportierbare Kabine (16a, 16b, 16c, 16d, 116a, 116b) zur Aufnahme wenigstens einer Person (18),
wobei das Transportfahrzeug (22a, 22b, 22c, 122) und die Kabine (16a, 16b, 16c, 16d, 116a, 116b) koppelbar und entkoppelbar sind, so dass die Kabine (16a, 16b, 16c, 16d, 116a, 116b) in einem mit dem Transportfahrzeug (22a, 22b, 22c, 122) gekoppelten Zustand vom Transportfahrzeug (22a, 22b, 22c, 122) transportiert werden kann,
wobei das Personentransportsystem (10, 110) eine an ein Gebäude (12, 112) angebundene Verlagerungseinrichtung (14, 114) aufweist und die Verlagerungseinrichtung (14, 114) und die Kabine (16a, 16b, 16c, 16d, 116a, 116b) koppelbar und entkoppelbar sind, so dass die Kabine (16a, 16b, 16c, 16d, 116a, 116b) in einem mit der Verlagerungseinrichtung (14, 114) gekoppelten Zustand von der Verlagerungseinrichtung (14, 114) relativ zum genannten Gebäude (12, 112) auf einem ersten Haupt-Verlagerungsweg (36, 136) verlagert werden kann,
**dadurch gekennzeichnet, dass**
die Verlagerungseinrichtung (14, 114) neben dem ersten Haupt-Verlagerungsweg (36, 136) einen zweiten Haupt-Verlagerungsweg (38, 138) aufweist, auf dem die Kabine (16a, 16b, 16c, 16d, 116a, 116b) verlagert werden kann, wobei die genannten Haupt-Verlagerungswege (36, 38; 136, 138) unterschiedliche Haupt-Verlagerungsrichtungen aufweisen.

2. Personentransportsystem nach Anspruch 1,
**dadurch gekennzeichnet, dass**
die Verlagerungseinrichtung (14) einen Neben-Verlagerungsweg (48) für die Kabine (16a, 16b, 16c, 16d) aufweist, wobei der Neben-Verlagerungsweg (48)
- von einem Haupt-Verlagerungsweg (38) abzweigt und
- so ausgeführt und angeordnet ist, dass er eine Kabine (16a, 16b, 16c, 16d) so aufnehmen kann und dass der Haupt-Verlagerungsweg (38), aus dem der entsprechende Neben-Verlagerungsweg (48) abzweigt, bei einer im entsprechenden Neben-Verlagerungsweg (48) aufgenommenen Kabine (16a, 16b, 16c, 16d) von einer anderen Kabine (16a, 16b, 16c, 16d) benutzbar ist.

3. Personentransportsystem nach Anspruch 1 oder 2,
**dadurch gekennzeichnet, dass**
die Verlagerungseinrichtung (14,114)
- einen ersten Antrieb (32),
- einen zweiten Antrieb (42),
- eine erste einrichtungsseitige Kopplungskomponente (30) und
- eine zweite einrichtungsseitige Kopplungskomponente (46),
aufweist, wobei
- mittels des ersten Antriebs (32) die erste einrichtungsseitige Kopplungskomponente (30) auf dem ersten Haupt-Verlagerungswegs (36) verlagert werden kann,
- mittels des zweiten Antriebs (42) die zweite einrichtungsseitige Kopplungskomponente (46) auf dem zweiten Haupt-Verlagerungsweg (38) verlagert werden kann,
- die erste einrichtungsseitige Kopplungskomponente (30) so ausgeführt und angeordnet ist, dass sie mit einer ersten kabinenseitigen Kopplungskomponente (24) der Kabine (16a, 16b, 16c, 16d) koppelbar ist und
- die zweite einrichtungsseitige Kopplungskomponente (46) so ausgeführt und angeordnet ist, dass sie mit einer zweiten kabinenseitigen Kopplungskomponente (26) der Kabine (16a, 16b, 16c, 16d) koppelbar ist.

4. Personentransportsystem nach Anspruch 2 und 3,
**dadurch gekennzeichnet, dass**
die Verlagerungseinrichtung (14)
- einen dritten Antrieb (52) und
- eine dritte einrichtungsseitige Kopplungskomponente (54) aufweist, wobei
- mittels des dritten Antriebs (52) die dritte einrichtungsseitige Kopplungskomponente (54) auf einem Neben-Verlagerungswegs (48) verlagert werden kann und
- die dritte einrichtungsseitige Kopplungskomponente (54) so ausgeführt und angeordnet ist, dass sie mit der ersten kabinenseitigen Kopplungskomponente (24) der Kabine (16a, 16b, 16c, 16d) koppelbar ist.

5. Personentransportsystem nach einem der Ansprüche 1 bis 4,
**dadurch gekennzeichnet, dass**
die Verlagerungseinrichtung (14) einen Wagen (70) aufweist, auf welchen die Kabine (16a) aufgesetzt und auf einem horizontal verlaufendem Haupt-Verlagerungsweg (38) verlagert werden kann.

6. Personentransportsystem nach einem der Ansprüche 1 bis 5,
**dadurch gekennzeichnet, dass**
der zweite Haupt-Verlagerungsweg (38) der Verlagerungseinrichtung (14) ein bewegliches Verlängerungselement (84) aufweist, wobei das Verlängerungselement (84) so ausgeführt und angeordnet ist, dass mittels des Verlängerungselements (84) der zweite Haupt-Verlagerungsweg (38) in einen ersten Haupt-Verlagerungsweg (36) hinein verlängert werden kann, womit ein Wechsel der Kabine (16a) vom ersten Haupt-Verlagerungsweg (36) in den zweiten Haupt-Verlagerungsweg (38) und umgekehrt ermöglicht wird.

7. Personentransportsystem nach einem der Ansprüche 3 bis 5,
**dadurch gekennzeichnet, dass**
die erste einrichtungsseitige Kopplungskomponente (30) der Verlagerungseinrichtung (14) einen Tragarm (72) aufweist, welcher mit einer an einer Oberseite oder an einer Unterseite der Kabine (16a) angeordneten ersten kabinenseitigen Kopplungskomponente (24) der Kabine (16a) koppelbar ist und so um eine vertikal verlaufende erste Schwenkachse (78) verschwenkbar ist, dass eine mit der ersten einrichtungsseitigen Kopplungskomponente (30) gekoppelte Kabine (16a) aus einem ersten Haupt-Verlagerungsweg (36) in einen zweiten Haupt-Verlagerungsweg (38) verlagert werden kann, womit ein Wechsel der Kabine (16a) vom ersten Haupt-Verlagerungsweg (36) in den zweiten Haupt-Verlagerungsweg (38) und umgekehrt ermöglicht wird.

8. Personentransportsystem nach einem der Ansprüche 3 bis 5,
**dadurch gekennzeichnet, dass**
die erste einrichtungsseitige Kopplungskomponente (30) der Verlagerungseinrichtung (14) ein Halteelement (80) aufweist, welches mit einer an einer Seitenfläche der Kabine (16a) angeordneten ersten kabinenseitigen Kopplungskomponente (30) der Kabine (16a) koppelbar ist und so um eine vertikal verlaufende zweite Schwenkachse (83) verschwenkbar ist, dass eine mit der ersten einrichtungsseitigen Kopplungskomponente (30) gekoppelte Kabine (16a) aus einem ersten Haupt-Verlagerungsweg (36) in einen zweiten Haupt-Verlagerungsweg (38) verlagert werden kann, womit ein Wechsel der Kabine (16a) vom ersten Haupt-Verlagerungsweg (36) in den zweiten Haupt-Verlagerungsweg (38) und umgekehrt ermöglicht wird.

9. Personentransportsystem nach einem der Ansprüche 1 bis 8,
**gekennzeichnet durch**
einen an das genannte Gebäude (12) angebundenen Aufzug (58), mittels welchem ein Transportfahrzeug (22a, 22b, 22c) von einer Anlieferungsebene (62) auf eine Lagerungsebene (64) verlagert werden kann.

10. Personentransportsystem nach Anspruch 9,
**dadurch gekennzeichnet, dass**
der Aufzug (58) einen hauptsächlich vertikal verlaufenden Aufzugschacht (60) aufweist, in welchem eine das Transportfahrzeug (22a, 22b, 22c) tragende Aufzugsplattform (56) hauptsächlich vertikal verlagert werden kann, wobei der Aufzugschacht (60) fluchtend zum ersten Haupt-Verlagerungsweg (36) angeordnet ist.

11. Personentransportsystem nach einem der Ansprüche 1 bis 10,
**gekennzeichnet durch**
eine erste Kopplungsstation (120) an welcher eine Kabine (116a, 116b)
- von einer ersten Art von Transportfahrzeugen (122) entkoppelt und mit der Verlagerungseinrichtung (114) gekoppelt und
- von der Verlagerungseinrichtung (114) entkoppelt und mit der ersten Art von Transportfahrzeugen (122) gekoppelt werden kann und
eine zweite Kopplungsstation (121) an welcher eine Kabine (116a, 116b)
- von einer zweiten Art von Transportfahrzeugen (123) entkoppelt und mit der Verlagerungseinrichtung (114) gekoppelt und
- von der Verlagerungseinrichtung (114) entkoppelt und mit der zweiten Art von Transportfahrzeugen (123) gekoppelt werden kann.

12. Verfahren zum Transportieren einer Person in einer Kabine,
wobei die Kabine (16a, 16b, 16c, 16d, 116a, 116b) mit einem Transportfahrzeug (22a, 22b, 22c, 122) gekoppelt und vom Transportfahrzeug (22a, 22b, 22c, 122) mit der Person (18) zu einem Gebäude (12, 112) transportiert wird,
wobei die Kabine (16a, 16b, 16c, 16d, 116a, 116b) mit der Person (18) vom Transportfahrzeug (22a, 22b, 22c, 122) entkoppelt, mit einer an das Gebäude (12, 112) angebundenen Verlagerungseinrichtung (14, 114) gekoppelt und von der Verlagerungseinrichtung (14, 114) relativ zum genannten Gebäude (12, 112) auf einem ersten Haupt-Verlagerungsweg (36, 136) verlagert wird,
**dadurch gekennzeichnet, dass**
die Kabine (16a, 16b, 16c, 16d, 116a, 116b) mit der Person (18) von der Verlagerungseinrichtung (14, 114) relativ zum genannten Gebäude (12, 112) auch auf einem zweiten Haupt-Verlagerungsweg (38, 138) verlagert wird, wobei die genannten Haupt-Verlagerungswege (36, 38; 136, 138) unterschiedliche Haupt-Verlagerungsrichtungen aufweisen.

13. Verfahren nach Anspruch 12,
**dadurch gekennzeichnet, dass**
- die Kabine (16a, 16b, 16c, 16d) in einen Neben-Verlagerungsweg (48) der Verlagerungseinrichtung (14) verlagert wird, wobei der Haupt-Verlagerungsweg (38), aus dem der genannte Neben-Verlagerungsweg (48) abzweigt, von anderen Kabinen (16a, 16b, 16c, 16d) benutzbar bleibt,
- die Person (18) die Kabine (16a, 16b, 16c, 16d) verlässt und
- die Kabine (16a, 16b, 16c, 16d) bis zur nächsten Nutzung durch eine Person (18) in dem genannten Neben-Verlagerungsweg (48) verbleibt.

14. Verfahren nach Anspruch 12 oder 13,
**dadurch gekennzeichnet, dass**
das Transportfahrzeug (22a, 22b, 22c) nach dem Entkoppeln von der Kabine (16a, 16b, 16c, 16d) in ein Lager (64) gebracht wird und bis zur nächsten Nutzung dem genannten Lager (64) verbleibt.

## Claims

1. A passenger transport system for
a cabin (16a, 16b, 16c, 16d, 116a, 116b) transportable by a transport vehicle (22a, 22b, 22c, 122) for accommodating at least one passenger (18),
wherein the transport vehicle (22a, 22b, 22c, 122) and the cabin (16a, 16b, 16c, 16d, 116a, 116b) can be coupled and decoupled such that the cabin (16a, 16b, 16c, 16d, 116a, 116b) can be transported by the transport vehicle (22a, 22b, 22c, 122) when the cabin is coupled to the transport vehicle (22a, 22b, 22c, 122),
wherein the passenger transport system (10, 110) has a movement device (14, 114) connected to a building (12, 112), and the movement device (14, 114) and the cabin (16a, 16b, 16c, 16d, 116a, 116b) can be coupled and decoupled such that the cabin (16a, 16b, 16c, 16d, 116a, 116b) can be moved by the movement device (14, 114) relative to aforementioned building (12, 112) on a first main movement path (36, 136) in a state coupled to the movement device (14, 114),
**characterized in that**
the movement device (14, 114) has, in addition to the first main movement path (36, 136), a second main movement path (38, 138) on which the cabin (16a, 16b, 16c, 16d, 116a, 116b) can be moved, wherein aforementioned main movement paths (36, 38; 136, 138) have different main movement directions.

2. The passenger transport system according to claim 1,
**characterized in that**
the movement device (14) has a secondary movement path (48) for the cabin (16a, 16b, 16c, 16d), wherein the secondary movement path (48)
- branches off from a main movement path (38), and
- is designed and arranged in such a way that it can accommodate a cabin (16a, 16b, 16c, 16d), and that the main movement path (38), from which the corresponding secondary movement path (48) branches off, can be used by another cabin (16a, 16b, 16c, 16d) when a cabin (16a, 16b, 16c, 16d) is accommodated in the corresponding secondary movement path (48).

3. The passenger transport system according to claim 1 or 2,
**characterized in that**
the movement device (14, 114) has
- a first drive (32),
- a second drive (42),
- a first device-side coupling component (30) and
- a second device-side coupling component (46),
wherein
- by means of the first drive (32), the first device-side coupling component (30) can be moved on the first main movement path (36),
- by means of the second drive (42) the second device-side coupling component (46) can be moved on the second main movement path (38),
- the first device-side coupling component (30) is designed and arranged in such a way that it can be coupled to a first cabin-side coupling component (24) of the cabin (16a, 16b, 16c, 16d), and
- the second device-side coupling component (46) is designed and arranged in such a way that it can be coupled to a second cabin-side coupling component (26) of the cabin (16a, 16b, 16c, 16d).

4. The passenger transport system according to claims 2 and 3,
**characterized in that**
the movement device (14) has
- a third drive (52), and
- a third device-side coupling component (54)
wherein
- by means of the third drive (52), the third device-side coupling component (54) can be moved on a secondary movement path (48), and
- the third device-side coupling component (54) is designed and arranged in such a way that it can be coupled to the first cabin-side coupling component (24) of the cabin (16a, 16b, 16c, 16d).

5. The passenger transport system according to any of claims 1 to 4,
**characterized in that**
the movement device (14) has a trolley (70) onto which the cabin (16a) can be set down and moved on a horizontally running main movement path (38).

6. The passenger transport system according to any of claims 1 to 5,
**characterized in that**
the second main movement path (38) of the movement device (14) has a movable extension element (84), wherein the extension element (84) is designed and arranged in such a way that, by means of the extension element (84), the second main movement path (38) can be extended into a first main movement path (36), therefore enabling a change of the cabin (16a) from the first main movement path (36) onto the second main movement path (38) and vice versa.

7. The passenger transport system according to any of claims 3 to 5,
**characterized in that**
the first device-side coupling component (30) of the movement device (14) has a support arm (72) which can be coupled to a first cabin-side coupling component (24) of the cabin (16a) arranged on an upper side or on an underside of the cabin (16a) and can be pivoted about a vertically running first pivot axis (78) in such a way that a cabin (16a) coupled to the first device-side coupling component (30) can be moved from a first main movement path (36) onto a second main movement path (38), thus enabling a change of the cabin (16a) from the first main movement path (36) onto the second main movement path (38) and vice versa.

8. The passenger transport system according to any of claims 3 to 5,
**characterized in that**
the first device-side coupling component (30) of the movement device (14) has a holding element (80) which can be coupled to a first cabin-side coupling component (30) of the cabin (16a) arranged on a side surface of the cabin (16a) and can be pivoted about a vertically running second pivot axis (83) in such a way that a cabin (16a) coupled to the first device-side coupling component (30) can be moved from a first main movement path (36) onto a second main movement path (38), thus enabling a change of the cabin (16a) from the first main movement path (36) onto the second main movement path (38) and vice versa.

9. The passenger transport system according to any of claims 1 to 8,
**characterized by**
an elevator (58) connected to aforementioned building (12), by means of which a transport vehicle (22a, 22b, 22c) can be moved from a delivery level (62) to a storage level (64).

10. The passenger transport system according to claim 9,
**characterized in that**
the elevator (58) has an elevator shaft (60) running mainly vertically in which an elevator platform (56) carrying the transport vehicle (22a, 22b, 22c) can be moved mainly vertically, wherein the elevator shaft (60) is arranged in alignment with the first main movement path (36).

11. The passenger transport system according to any of claims 1 to 10,
**characterized by**
a first coupling station (120) at which a cabin (116a, 116b)
- can be decoupled from a first type of transport vehicle (122) and coupled to the movement device (114), and
- can be decoupled from the movement device (114) and coupled to the first type of transport vehicles (122), and
a second coupling station (121) at which a cabin (116a, 116b)
- can be decoupled from a second type of transport vehicles (123) and coupled to the movement device (114) and
- can be decoupled from the movement device (114) and coupled to the second type of transport vehicles (123).

12. A method for transporting a passenger in a cabin,
wherein the cabin (16a, 16b, 16c, 16d, 116a, 116b) is coupled to a transport vehicle (22a, 22b, 22c, 122) and is transported to a building (12, 112) by the transport vehicle (22a, 22b, 22c, 122) with the passenger (18),
wherein the cabin (16a, 16b, 16c, 16d, 116a, 116b) with the passenger (18) is decoupled from the transport vehicle (22a, 22b, 22c, 122), coupled to a movement device (14, 114) connected to the building (12, 112) and moved by the movement device (14, 114) relative to the aforementioned building (12, 112) on a first main movement path (36, 136),
**characterized in that**
the cabin (16a, 16b, 16c, 16d, 116a, 116b) with the passenger (18) is also moved by the movement device (14, 114) relative to the aforementioned building (12, 112) on a second main movement path (38, 138), wherein the aforementioned main movement paths (36, 38; 136, 138) have different main movement directions.

13. The method according to claim 12,
**characterized in that**
- the cabin (16a, 16b, 16c, 16d) is moved onto a secondary movement path (48) of the movement device (14), wherein the main movement path (38) from which the aforementioned secondary movement path (48) branches off remains usable by other cabins (16a, 16b, 16c, 16d),
- the passenger (18) leaves the cabin (16a, 16b, 16c, 16d), and
- the cabin (16a, 16b, 16c, 16d) remains on the aforementioned second movement path (48) until the next use by a passenger (18).

14. The method according to claim 12 or 13,
**characterized in that**
the transport vehicle (22a, 22b, 22c) is brought to a storage area (64) after being uncoupled from the cabin (16a, 16b, 16c, 16d) and remains in the aforementioned storage facility (64) until the next use.

## Revendications

1. Système de transport de passagers pour
une cabine (16a, 16b, 16c, 16d, 116a, 116b) transportable par un véhicule de transport (22a, 22b, 22c, 122) pour accueillir au moins un passager (18),
dans lequel le véhicule de transport (22a, 22b, 22c, 122) et la cabine (16a, 16b, 16c, 16d, 116a, 116b) peuvent être couplés et découplés de telle sorte que la cabine (16a, 16b, 16c, 16d, 116a, 116b) puisse être transportée par le véhicule de transport (22a, 22b, 22c, 122) lorsque la cabine est couplée au véhicule de transport (22a, 22b, 22c, 122),
dans lequel le système de transport de passagers (10, 110) comporte un dispositif de déplacement (14, 114) relié à un bâtiment (12, 112), et le dispositif de déplacement (14, 114) et la cabine (16a, 16b, 16c, 16d, 116a, 116b) peuvent être couplés et découplés de telle sorte que la cabine (16a, 16b, 16c, 16d, 116a, 116b) puisse être déplacée par le dispositif de déplacement (14, 114) par rapport au bâtiment susmentionné (12, 112) sur un premier trajet de déplacement principal (36, 136) dans un état couplé au dispositif de déplacement (14, 114),
**caractérisé en ce que**
le dispositif de déplacement (14, 114) comporte, en plus de la première trajectoire de déplacement principale (36, 136), une deuxième trajectoire de déplacement principale (38, 138) sur laquelle la cabine (16a, 16b, 16c, 16d, 116a, 116b) peut être déplacée, les chemins de déplacement principaux susmentionnés (36, 38 ; 136, 138) ayant des directions de déplacement principales différentes.

2. Système de transport de passagers selon la revendication 1,
**caractérisé en ce que**
le dispositif de déplacement (14) comporte une trajectoire de déplacement secondaire (48) pour la cabine (16a, 16b, 16c, 16d), dans lequel la trajectoire de déplacement secondaire (48)
- dérive d'une trajectoire de déplacement principale (38), et
- est conçu et agencé de telle manière qu'il peut accueillir une cabine (16a, 16b, 16c, 16d), et que la trajectoire de déplacement principale (38), à partir de laquelle la trajectoire de déplacement secondaire correspondante (48) bifurque, peut être utilisée par une autre cabine (16a, 16b, 16c, 16d) lorsqu'une cabine (16a, 16b, 16c, 16d) est logée dans la voie de déplacement secondaire correspondante (48).

3. Le système de transport de passagers selon la revendication 1 ou 2,
**caractérisé en ce que**
le dispositif de déplacement (14, 114) comporte
- un premier entraînement (32),
- un deuxième entraînement (42),
- un premier composant d'accouplement côté dispositif (30) et
- un deuxième composant d'accouplement côté dispositif (46),
dans lequel
- au moyen du premier entraînement (32), le premier composant d'accouplement côté dispositif (30) peut être déplacé sur le premier trajet de déplacement principal (36),
- au moyen du deuxième entraînement (42), le deuxième composant d'accouplement côté dispositif (46) peut être déplacé sur le deuxième trajet de déplacement principal (38),
- le premier composant d'accouplement côté dispositif (30) est conçu et agencé de telle manière qu'il peut être accouplé à un premier composant d'accouplement côté cabine (24) de la cabine (16a, 16b, 16c, 16d), et
- le deuxième composant d'accouplement côté dispositif (46) est conçu et agencé de manière à pouvoir être accouplé à un deuxième composant d'accouplement côté cabine (26) de la cabine (16a, 16b, 16c, 16d).

4. Le système de transport de passagers selon les revendications 2 et 3,
**caractérisé en ce que**
le dispositif de déplacement (14) comporte
- un troisième entraînement (52), et
- un troisième composant d'accouplement côté dispositif (54) dans lequel
- au moyen du troisième entraînement (52), le troisième composant d'accouplement côté dispositif (54) peut être déplacé sur une trajectoire de mouvement secondaire (48), et
- le troisième composant d'accouplement côté dispositif (54) est conçu et agencé de telle manière qu'il peut être accouplé au premier composant d'accouplement côté cabine (24) de la cabine (16a, 16b, 16c, 16d).

5. Système de transport de passagers selon l'une quelconque des revendications 1 à 4, **caractérisé en ce que**
le dispositif de déplacement (14) comporte un chariot (70) sur lequel la cabine (16a) peut être posée et déplacée sur une voie de déplacement principale (38) s'étendant horizontalement.

6. Le système de transport de passagers selon l'une quelconque des revendications 1 à 5, **caractérisé en ce que**
la deuxième voie de déplacement principale (38) du dispositif de déplacement (14) comporte un élément d'extension mobile (84), l'élément d'extension (84) étant conçu et agencé de telle sorte que, grâce à l'élément d'extension (84), la deuxième voie de déplacement principale (38) peut être prolongée pour former une première voie de déplacement principale (36), permettant ainsi un changement de la cabine (16a) du premier trajet de déplacement principal (36) vers le deuxième trajet de déplacement principal (38) et vice versa.

7. Le système de transport de passagers selon l'une quelconque des revendications 3 à 5, **caractérisé en ce que**
le premier composant d'accouplement côté dispositif (30) du dispositif de déplacement (14) comporte un bras de support (72) qui peut être accouplé à un premier composant d'accouplement côté cabine (24) de la cabine (16a) disposé sur un côté supérieur ou sur un côté inférieur de la cabine (16a) et qui peut pivoter autour d'un premier axe de pivotement (78) s'étendant verticalement de telle sorte qu'une cabine (16a) couplée au premier composant d'accouplement côté dispositif (30) puisse être déplacée d'une première trajectoire de déplacement principale (36) vers une deuxième trajectoire de déplacement principale (38), permettant ainsi un changement de la cabine (16a) de la première trajectoire de déplacement principale (36) vers la deuxième trajectoire de déplacement principale (38) et vice versa.

8. Système de transport de passagers selon l'une quelconque des revendications 3 à 5, **caractérisé en ce que**
le premier composant d'accouplement côté dispositif (30) du dispositif de déplacement (14) comporte un élément de retenue (80) qui peut être accouplé à un premier composant d'accouplement côté cabine (30) de la cabine (16a) disposé sur une surface latérale de la cabine (16a) et qui peut pivoter autour d'un deuxième axe de pivotement (83) s'étendant verticalement de telle sorte qu'une cabine (16a) couplée au premier composant d'accouplement côté dispositif (30) puisse être déplacée d'une première trajectoire de déplacement principale (36) vers une deuxième trajectoire de déplacement principale (38), permettant ainsi un changement de la cabine (16a) de la première trajectoire de déplacement principale (36) vers la deuxième trajectoire de déplacement principale (38) et vice versa.

9. Système de transport de passagers selon l'une quelconque des revendications 1 à 8, **caractérisé par**
un ascenseur automoteur (58) relié au bâtiment (12) susmentionné, au moyen duquel un véhicule de transport (22a, 22b, 22c) peut être déplacé d'un niveau de livraison (62) à un niveau de stockage (64).

10. Le système de transport de passagers selon la revendication 9,
**caractérisé en ce que**
l'ascenseur (58) comporte une cage d'ascenseur (60) s'étendant principalement verticalement, dans laquelle une plate-forme élévatrice (56) portant le véhicule de transport (22a, 22b, 22c) peut être déplacée principalement verticalement, la cage d'ascenseur (60) étant disposée dans l'alignement du premier trajet de déplacement principal (36).

11. Système de transport de passagers selon l'une quelconque des revendications 1 à 10, **caractérisé par**
une première station d'accouplement (120) au niveau de laquelle une cabine (116a, 116b)
- peut être découplée d'un premier type de véhicule de transport (122) et couplée au dispositif de déplacement (114), et
- peut être découplée du dispositif de déplacement (114) et couplée au premier type de véhicules de transport (122), et
une deuxième station d'accouplement (121) dans laquelle une cabine (116a, 116b)
- peut être découplée d'un deuxième type de véhicules de transport (123) et couplée au dispositif de déplacement (114) et
- peut être désaccouplée du dispositif de déplacement (114) et accouplée au deuxième type de véhicules de transport (123).

12. Procédé pour transporter un passager dans une cabine,
dans lequel la cabine (16a, 16b, 16c, 16d, 116a, 116b) est couplée à un véhicule de transport (22a, 22b, 22c, 122) et est transportée vers un bâtiment (12, 112) par le véhicule de transport (22a, 22b, 22c, 122) avec le passager (18),
la cabine (16a, 16b, 16c, 16d, 116a, 116b) avec le passager (18) étant découplée du véhicule de transport (22a, 22b, 22c, 122), couplée à un dispositif de déplacement (14, 114) relié au bâtiment (12, 112) et déplacée par le dispositif de déplacement (14, 114) par rapport au bâtiment susmentionné (12, 112) sur un premier trajet de déplacement principal (36, 136),
**caractérisé en ce que**
la cabine (16a, 16b, 16c, 16d, 116a, 116b) avec le passager (18) est également déplacée par le dispositif de déplacement (14, 114) par rapport au bâtiment susmentionné (12, 112) sur un deuxième trajet de déplacement principal (38, 138), les trajets de déplacement principaux susmentionnés (36, 38 ; 136, 138) ayant des directions de déplacement principales différentes.

13. Procédé selon la revendication 12,
**caractérisé en ce que**
- la cabine (16a, 16b, 16c, 16d) est déplacée sur une trajectoire de déplacement secondaire (48) du dispositif de déplacement (14), la trajectoire de déplacement principale (38) à partir de laquelle la trajectoire de déplacement secondaire (48) précitée bifurque restant utilisable par d'autres cabines (16a, 16b, 16c, 16d),
- le passager (18) quitte la cabine (16a, 16b, 16c, 16d), et
- la cabine (16a, 16b, 16c, 16d) reste sur le deuxième chemin de déplacement (48) susmentionné jusqu'à la prochaine utilisation par un passager (18).

14. Procédé selon la revendication 12 ou 13,
**caractérisé en ce que**
le véhicule de transport (22a, 22b, 22c) est amené dans une zone de stockage (64) après avoir été désaccouplé de la cabine (16a, 16b, 16c, 16d) et reste dans l'installation de stockage susmentionnée (64) jusqu'à sa prochaine utilisation.
